# EUROPEAN PATENT SPECIFICATION

(11) **EP 1 169 366 B1**
(45) Date of publication and mention of the grant of the patent: **06.10.2004**
(21) Application number: 00920603.8
(22) Date of filing: 28.03.2000
(51) Int. Cl.: C08F 290/02, C08F 290/06, C08G 18/50, G02B 1/04, C08G 18/61

(54) **ORGANIC COMPOUNDS**
ORGANISCHE VERBINDUNGEN
COMPOSES ORGANIQUES

(30) Priority: 30.03.1999 US 280510
(43) Date of publication of application: 09.01.2002
(73) Proprietor: Novartis AG, 4056 Basel (CH); Novartis Pharma GmbH, 1230 Wien (AT)
(72) Inventor: HIRT, Thomas, CH-9445 Rebstein (CH); SCHREMMER, Jacalyn, Mary, Atlanta, GA 30324 (US); HOLLAND, Troy, Vernon, Suwanee, GA 30024 (US); LOHMANN, Dieter, CH-4142 Münchenstein (CH)
(74) Representative: Grubb, Philip William
(86) International application number: PCT/EP2000/002724
(87) International publication number: WO 2000/059970

(56) References cited:
- EP-A- 0 291 452
- EP-A- 0 330 616
- WO-A-96/31791
- WO-A-97/00274
- WO-A-97/49740
- US-A- 4 837 289
- US-A- 5 760 100

## Description

The present invention relates to novel crosslinkable copolymers, to a process for the preparation thereof and to the use thereof for the manufacture of moldings, especially ophthalmic moldings.

EP-A-291452 and US-A-4,837,289 disclose hydrophobic polysiloxanes. U.S patents Nrs. 5,760,100 or 5,807,944 disclose crosslinkable amphiphilic block copolymers comprising a hydrophobic middle block to which are linked two or more hydrophilic blocks. While the materials disclosed therein have proven to be very effective as bulk material for the manufacture of biomedical articles, in particular ophthalmic moldings, their surface properties, in particular the wettability characteristics, are in general not sufficient to use them as a biomedical device without previously applying a suitable coating on their surface.

Therefore, there is a need to provide polymeric materials which may be used for the manufacture of biomedical articles such as ophthalmic moldings per se without a subsequent surface medication. Surprisingly, it now has been found that articles, particularly biomedical devices such as contact lenses, with an improved wettability may be obtained from novel amphiphilic block copolymers comprising a hydrophobic segment to which are covalently attached moieties comprising a crosslinkable ethylenically unsaturated group as well as surface-modifying hydrophilic segments.

The present invention therefore relates to an amphiphilic block copolymer of formula 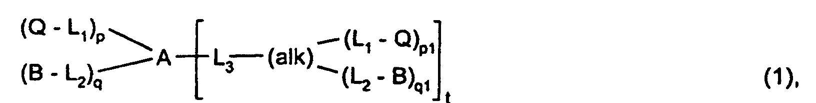 wherein A is a hydrophobic polysiloxane or perfluoroalkyl polyether segment;
B is a surface-modifying hydrophilic segment having a weight average molecular weight of ≥100 that is devoid of a crosslinkable group;
Q is a moiety comprising at least one crosslinkable ethylenically unsaturated group;
(alk) is C₂-C₂₀-alkylene which is unsubstituted or substituted by hydroxy;
L₁, L₂ and L₃ are each independently of the other a linking group;
p1 and q1 are each independently of the other an integer from 1 to 12; and either
t is 0 and p and q are each independently of the other an integer from 2 to 20; or
t is an integer from 1 to 8 and p and q are each 0.

In case that t is 0, p and q are each independently of the other preferably an integer from 2 to 20, more preferably 2 to 15 and in particular 2 to 10. In case that p and q are each 0, t is preferably an integer from 1 to 6, more preferably 1 to 4 and in particular 2. p1 is preferably an integer from 1 to 6, more preferably 1 to 4 and in particular 1 or 2. q1 is preferably an integer from 1 to 10, more preferably 1 to 8, and in particular 1 to 4.

One group of suitable block copolymers of the invention conforms to the formula 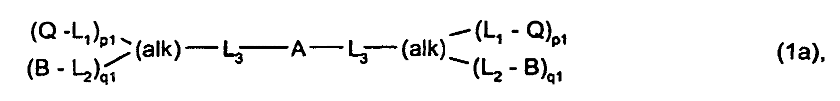 wherein A, B, L₁, L₂, L₃, Q, (alk), p1 and q1 are each as defined above.

Another group of suitable block copolymers of the invention conforms to formula

(B - L₂)_{q}-A-(L₁ - Q)ₚ (1b),

wherein A, B, L₁, L₂ and Q are each as defined above, and p and q are each independently of the other an integer from 2 to 20, more preferably 2 to 15 and in particular 2 to 10.

In one embodiment of the invention A is a polysiloxane segment of formula 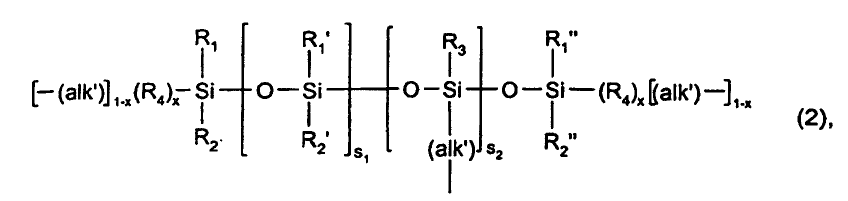 wherein (alk') is alkylene having 1 to 20 carbon atoms which may be interrupted by -O-;
x is 0 or 1;
80 to 100 % of the radicals R₁, R₁', R₁", R₂, R₂', R₂", R₃ and R₄, independently of one another, are C₁-C₈-alkyl, and 0-20% of the radicals R₁, R₁', R₁", R₂, R₂', R₂", R₃ and R₄, independently of one another, are unsubstituted or C₁-C₄ alkyl- or C₁-C₄- alkoxy-substituted phenyl, fluoro(C₁-C₁₈-alkyl) or cyano(C₁-C₁₂-alkyl),
s₁ is an integer from 5 to 700;
s₂ is the sum of (p+q+t-2) if x is 0, and is the sum of (p+q+t) if x is 1; wherein p, q and t are as defined above, and
the sum (s₁+s₂) is from 5 to 700.

In a preferred meaning of the polysiloxanes of formula (2), the sum (s₁+s₂) is an integer from 10 to 500, more preferably 10 to 300, even more preferably 20 to 150 and in particular preferably 50 to 140.

(alk') is preferably C₂-C₈-alkylene, which may be interrupted by -O- and more preferably C₂-C₆-alkylene which may be interrupted by -O-. Examples of particular preferred radicals (alk') are linear or branched C₂-C₆ alkylene or a radical -(CH₂)₁₋₃-O-(CH₂)₁₋₃-, especially C₂-C₄-alkylene or a radical -(CH₂)₂₋₃-O-(CH₂)₂₋₃-.

Preferably the radicals R₁, R₁', R₁", R₂, R₂', R₂", R₃ and R₄ are each independently of one another C₁-C₆-alkyl, more preferably each C₁-C₄-alkyl, more preferably each C₁-C₂-alkyl and in particular each methyl.

One embodiment of suitable polysiloxane hydrophobic blocks (A) emcompasses a radical of the above formula (2), wherein x is 0, s2 is 0, s1 is an integer from 5 to 700, preferably 10 to 500, more preferably 10 to 300, even more preferably 20 to 150 and in particular preferably 50 to 140, R₁, R₁', R₁", R₂, R₂', R₂" and R₃ are each independently of one another C₁-C₆-alkyl, and for (alk') the above given meanings and preferences apply. In this case, either t in formula (1) is 0 and p and q are each 1, or, preferably, p and q are each 0 and t is 2.

Another embodiment of suitable polysiloxane hydrophobic blocks (A) emcompasses a radical of the above formula (2), wherein x is 0, s₂ is the sum of (p+q+t-2), and for R₁, R₁', R₁", R₂, R₂', R₂", R₃,(alk'), p, q and t the above-given meanings and preferences each apply.

Still another embodiment of suitable polysiloxane hydrophobic blocks (A) emcompasses a radical of the above formula (2), wherein x is 1, s₂ is the sum of (p+q+t), and for R₁, R₁', R₁", R₂, R₂', R₂", R₃, R₄, p, q and t the above-given meanings and preferences each apply.

In another embodiment of the invention, A is a perfluoroalkyl polyether segment of formula

-(E)ₖ-Z-CF₂ -(OCF₂)_{y1}-(OCF₂CF₂)_{y2}-OCF₂-Z-(E)ₖ- (3),

In which y1 + y2 is a number in the range from 10 to 100; each Z, independently of the other, is a divalent radical having up to 12 carbon atoms or a bond; each E, independently of the others, is alkoxy, e.g. -(OCH₂CH₂)ᵣ-, where r has a value of from 0 to 2 as a statistical average, and where the link -Z-E- represents the sequence -Z-(OCH₂CH₂)ᵣ-; and k is 0 or 1;

Z is preferably a bond, C₁-C₈-alkylene or -CONH-phenylene, in which the -CO- moiety is linked to a CF₂ group. Z is particularly preferably C₁-C₄-alkylene, in particular methylene.

The perfluoroalkoxy units OCF₂ and OCF₂CF₂ having the indices y1 and y2 in Formula (3) can have a random distribution. The sum of the indices y1+y2 is preferably a number in the range from 10 to 50, particularly preferably from 10 to 30. The ratio y1:y2 is preferably in the range from 0.5 to 1.5, in particular in the range from 0.8 to 1.2.

In one embodiment of the invention, the segment A may comprise one of the polymers illustrated above. According to another embodiment, the polymer in segment A may comprise more than one kind of polymers as illustrated above, e.g., may comprise polysiloxane subsegments of formula (2) and perfluoroalkylene polyether units of formula (3). Preferably, segment A is a polysiloxane of formula (2).

Segments A of the prepolymers of the invention have a mean molecular weight of for example in the range from about 1,000 to about 50,000, preferably in the range from about 1,500 to about 30000 and particularly preferably in the range from about 2,000 to about 20,000.

L₁, L₂ and L₃ are each independently of the other, for example, a bivalent linking group of formula

-X₁-C(O)-NH-R₁₀-NH-C(O)-X₂- (4a),

-X₁-C(O)-R₁₀-C(O)-X₂- (4b),

-X₁-C(O)- (4c),

-C(O)-X₂- (4d),

or

-X₁-C(O)- X₂- (4e),

wherein X₁ and X₂ are each independently of the other a group -O-, -S- or -NR₀-, R₀ is hydrogen or C₁-C₄-alkyl, and R₁₀ is linear or branched C₁-C₁₈-alkylene or unsubstituted or C₁-C₄-alkyl- or C₁-C₄-alkoxy-substituted C₆-C₁₀-arylene, C₇-C₁₈-aralkylene, C₆-C₁₀-arylene-C₁-C₂-alkylene-C₆-C₁₀-arylene, C₃-C₈-cycloalkylene, C₃-C₈-cycloalkylene-C₁-C₆-alkylene, C₃-C₈-cycloalkylene-C₁-C₂-alkylene-C₃-C₈-cycloalkylene or C₁-C₆-alkylene-C₃-C₈-cycloalkylene-C₁-C₆-alkylene.

The linking groups L₁ and L₂ of formulae (4a) - (4e) are to be understood that the left bond is in each case directed to A or (alk) and the right bond is directed to Q or B. The linking group L₃ of formulae (4a) - (4e) is to be understood that the left bond is directed to A and the right bond is directed to (alk).

If X₁ or X₂ is a group -NR₀-, R₀ is preferably methyl, ethyl or in particular hydrogen.

In formulae (4a)-(4e) X₁ and X₂ are each independently of the other preferably a group -O-or -NR₀- and more preferably -O- or -NH-. In formula (4e) X₁ is most preferably -O- or -NH-and X₂ is -NH-.

R₁₀ as alkylene in formulae (4b) is preferably linear or branched C₁-C₁₂-alkylene, more preferably C₁-C₆-alkylene and most preferably C₁-C₄-alkylene.

R₁₀ as alkylene in formula (4a) is preferably a linear or branched C₃-C₁₄alkylene radical, more preferably a linear or branched C₄-C₁₂alkylene radical and most preferably a linear or branched C₆-C₁₀alkylene radical.

When R₁₀ is arylene, it is, for example, naphthylene or especially phenylene, each of which may be substituted, for example, by C₁-C₄-alkyl or by C₁-C₄-alkoxy. Preferably, R₁₀ as arylene is 1,3- or 1,4-phenylene that is unsubstituted or substituted by C₁-C₄-alkyl or by C₁-C₄-alkoxy in the ortho-position to at least one linkage site.

R₁₀ as aralkylene is preferably naphthylalkylene and most preferably phenylalkylene. The alkylene group in aralkylene contains preferably from 1 to 12, more preferably from 1 to 6 and most preferably from 1 to 4 carbon atoms. Most preferably, the alkylene group in aralkylene is methylene or ethylene.

When R₁₀ is cycloalkylene, it is preferably C₅-C₆cycloalkylene and most preferably cyclohexylene that is unsubstituted or substituted by methyl.

When R₁₀ is cycloalkylene-alkylene, it is preferably cyclopentylene-C₁-C₄-alkylene and especially cyclohexylene-C₁-C₄-alkylene, each unsubstituted or mono- or poly-substituted by C₁-C₄-alkyl, especially methyl. More preferably, the group cycloalkylene-alkylene is cyclo-hexylene-ethylene and, most preferably, cyclohexylene-methylene, each unsubstituted or substituted in the cyclohexylene radical by from 1 to 3 methyl groups.

When R₁₀ is alkylene-cycloalkylene-alkylene, it is preferably C₁-C₄-alkylene-cyclopentylene-C₁-C₄-alkylene and especially C₁-C₄-alkylene-cyclohexylene-C₁-C₄-alkylene, each unsubstituted or mono- or poly-substituted by C₁-C₄-alkyl, especially methyl. More preferably, the group alkylene-cycloalkylene-alkylene is ethylene-cyclohexylene-ethylene and, most preferably, is methylene-cyclohexylene-methylene, each unsubstituted or substituted in the cyclohexylene radical by from 1 to 3 methyl groups.

R₁₀ as C₃-C₈-cycloalkylene-C₁-C₂-alkylene-C₃-C₈-cycloalkylene or C₆-C₁₀-arylene-C₁-C₂-alkylene-C₆-C₁₀-arylene is preferably C₅-C₆-cycloalkylene-methylene-C₅-C₆-cycloalkylene or phenylene-methylene-phenylene, each of which may be unsubstituted or substituted in the cycloalkyl or phenyl ring by one or more methyl groups.

The radical R₁₀ in formula (4a) has a symmetrical or, preferably, an asymmetrical structure.

A preferred group of linking groups L₁ or L₂ comprises those of formula (4a), wherein R₁₀ is linear or branched C₆-C₁₀alkylene; cyclohexylene-methylene or cyclohexylene-methylene-cyclohexylene each unsubstituted or substituted in the cyclohexyl moiety by from 1 to 3 methyl groups; or phenylene or phenylene-methylene-phenylene each unsubstituted or substituted in the phenyl moiety by methyl.

The bivalent radical R₁₀ in formula (4a) is derived preferably from a diisocyanate and most preferably from a diisocyanate selected from the group isophorone diisocyanate (IPDI), toluytene-2,4-diisocyanate (TDI), 4,4'-methylenebis(cyclohexyl isocyanate), 1,6-diisocyanato-2,2,4-trimethyt-n-hexane (TMDI), methylenebis(phenyl isocyanate), methylenebis(cyctohexyl-4-isocyanate) and hexamethylene diisocyanate (HMDI).

Another preferred group of linking groups L₁ or L₂ comprises those of formula (4b), wherein R₁₀ is C₁-C₆-alkylene or 1,3- or 1,4-phenylene.

Further preferred linking groups L, or L₂ comprise -O(O)C-, -C(O)O-, -HNC(O)-, -C(O)NH-, -OC(O)NH-, -NHC(O)O- or -HNC(O)NH-. L₁ is most preferably a radical of formula (4a), (4c) or in particular (4e). L₂ is most preferably a radical of formula (4c), (4d) or in particular (4a).

A preferred group of linking groups L₃ comprises those of formula (4a), (4c) or (4d), in particular (4c), wherein the above meanings and preferences apply.

Suitable hydrophilic segments B are for example:
(i) non-ionic segments, for example a polyoxyalkylene, polysaccharid, polypeptide, poly(vinylpyrrolidone), polyhydroxyalkylacrylate or -methacrylate, polyacyl alkylene imine, polyacryl amide, polyvinyl alcohol, polyvinyl ether or polyol;
(ii) polyionic segments, for example a polycationic segment such as a polyallylammonium, polyethyleneimine, polyvinylbenzyltrimethylammonium, polyaniline, sulfonated polyaniline, polypyrrole or polypyridinium segment, or a polyanionic segment such as a polyacrylic or polymethacrylic acid, a polythiophene-acetic acid, a polystyrenesulfonic acid, or a zwitterionic segment; or
(iii) telomer segments which may be non-ionic, anionic, cationic or zwitterionic.
Polyionic segments in each case encompass the free amine, imine or acid or a suitable salt thereof.

Some examples of preferred hydrophilic segments B are a polyoxyalkylene, such as a polyethylene glycol or polypropylene glycol or a block copolymer thereof, a poty(vinylpyrrolidone), poly(hydroxyethylacrylate), poly(hydroxyethylmethacrylate), polyacrylamide, poly(N,N-dimethylacrylamide), polyacrylic or polymethacrylic acid, a polyacyl alkylene imine or a copolymeric mixture of two or more of the above-mentioned polymers.

B as a polyoxyalkylene radical may correspond, for example, to formula

R₅-[(O-CHR₇-CHR₆)_{b}-(O-CH₂-CH₂)ₐ]-(O-(alk"))_{c}- (5)

wherein R₅ is hydrogen, C₁-C₂₄-alkyl, C₁-C₂₄-alkanoyl or a radical -(alk")-NH₂, one of the radicals R₆ and R₇ is hydrogen and the other is methyl, (alk") is C₁-C₆-alkylene, c is the number 0 or 1, and each of a and b independently of the other is a number from 0 to 100, the sum of (a+b) being from 2 to 100.

In formula (5), R₅ is preferably hydrogen, C₁-C₄-alkyl or C₁-C₄-alkanoyl, more preferably hydrogen or C₁-C₂-alkyl and in particular hydrogen. (alk") is preferably C₂-C₄-alkylene and in particular 1,2-ethylene or 1,2- or 1,3-propylene. The variable c preferably is an integer of 0. Each of a and b independently of the others is preferably a number from 0 to 80, the sum of (a+b) being from 3 to 80. Most preferably, each of a and b independently of the others is a number from 0 to 50, the sum of (a+b) being from 4 to 50 and especially from 8 to 50. A preferred embodiment relates to polyoxyalkylene segments of formula (5) wherein b and c are each 0, R₅ is hydrogen, C₁-C₄-alkyl or C₁-C₄-alkanoyl, and for the variable a the above-mentioned meanings and preferences apply.

B as a polyacyl alkylene imine may correspond, for example, to a segment of formula 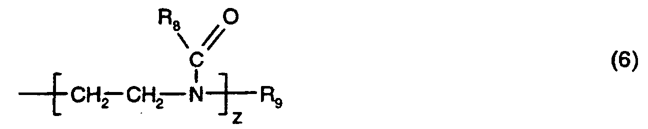 wherein R₈ is hydrogen; C₁-C₁₂-alkyl unsubstituted or substituted by hydroxy or fluoro and/or uninterrupted or interrupted by oxygen; C₅-C₈-cycloalkyl; phenyl; or benzyl, R₉ is, for example, C₁-C₁₂-alkyl, benzyl, C₂-C₄-alkanoyl, benzoyl or phenyl, preferably C₁-C₆-alkyl, acetyl or benzyl and in particular C₁-C₄-alkyl, and z is an integer from 2 to 150.

R₈ is preferably C₁-C₈-alkyl which is unsubstituted or substituted by hydroxy or fluorine and/or is uninterrupted or interrupted by -O-; or is C₃-C₈-alkenyl. R₈ is more preferably C₁-C₄-alkyl, hydroxy-C₁-C₄-alkyl or trifluoromethyl and most preferably methyl. z is preferably an integer from 4 to 100, more preferably 4 to 50 and especially 5 to 20.

B as a telomer may correspond, for example, to a segment of formula 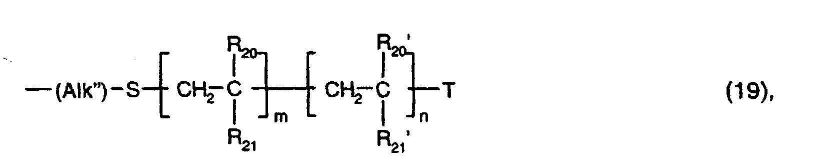 wherein (Alk") is C₂-C₁₂-alkylene,
T is a monovalent group that is suitable to act as a polymerization chain-reaction terminator, m and n are each independently of another an integer from 0 to 250, wherein the total of (m+n) is an integer from 2 to 250,
R₂₀ and R₂₀' are each independently of the other hydrogen or C₁-C₄-alkyl, preferably hydrogen or methyl,
R₂₁ is a hydrophilic non-ionic, anionic, cationic or zwitterionic substituent; and
R₂₁' independently has the meaning of R₂₁ or, in case of m>n, may also be a hydrophobic substituent.

Accordingly, the telomer chain of formula (19) may be a charged chain containing anionic, cationic and/or zwitterionic groups or may be an uncharged chain. In addition, the telomer chain may comprise a copolymeric mixture of uncharged and charged units. The distribution of the charges within the telomer, if present, may be random or blockwise.

In one preferrred embodiment of the invention, the telomer segment of formula (19) is composed solely of non-ionic monomer units. In another preferred embodiment of the invention, the telomer radical of formula (19) is composed solely of ionic monomer units, for example solely of cationic monomer units or solely of anionic monomer units. Still another preferred embodiment of the invention is directed to telomer segments of formula (19) comprising nonionic units and ionic units.

Suitable non-ionic substituents R₂₁ and R₂₁' include for example a radical C₁-C₆-alkyl which is substituted by one or more same or different substituents selected from the group consisting of -OH, C₁-C₄-alkoxy and -NR₂₂R₂₂', wherein R₂₂ and R₂₂' are each independently of another hydrogen or unsubstituted or hydroxy-substituted C₁-C₆-alkyl or phenyl; phenyl which is substituted by hydroxy, C₁-C₄-alkoxy or -NR₂₂R₂₂', wherein R₂₂ and R₂₂' are as defined above; a radical -COOU, wherein U is C₁-C₂₄-alkyl which is unsubstituted or substituted, for example, by hydroxy, C₁-C₄-alkoxy, -O-Si(CH₃)₃, -NR₂₂R₂₂' wherein R₂₂ and R₂₂' are as defined above, a radical -O-(CH₂CH₂O)_{1.24}-E₁ wherein E₁ is hydrogen or C₁-C₆- alkyl, or a radical -NH-C(O)-O-G, wherein -O-G is the radical of a saccharide with 1 to 8 sugar units or is a radical -O-(CH₂CH₂O)₁₋₂₄-E₁, wherein E₁ is as defined above, or U is C₅-C₈-cycloalkyl which is unsubstituted or substituted by C₁-C₄-alkyl or C₁-C₄-alkoxy, or is unsubstituted or C₁-C₄-alkyl- or C₁-C₄-alkoxy-substituted phenyl or C₇-C₁₂-aralkyl; -CONU₁U₂ wherein U₁ and U₂ are each independently hydrogen, C₁-C₁₂-alkyl, which is unsubstituted or substituted for example by hydroxy, C₁-C₄-alkoxy or a radical -O-(CH₂CH₂O)₁₋₂₄-E₁ wherein E₁ is as defined above, or U₁ and U₂ together with the adjacent N-atom form a five- or six-membered heterocyclic ring having no additional heteroatom or one additional oxygen or nitrogen atom; a radical -OU₃, wherein U₃ is hydrogen; or C₁-C₁₂-alkyl which is unsubstituted or substituted by -NR₂₂R₂₂'; or is a radical -C(O)-C₁-C₄-alkyl; and wherein R₂₂ and R₂₂' are as defined above; or a five- to seven-membered heterocyclic radical having at least one N-atom and being bound in each case via said nitrogen atom.

Suitable anionic substituents R₂₁ and R₂₁' include for example C₁-C₆-alkyl which is substituted by -SO₃H, -OSO₃H, -OPO₃H₂ and -COOH; phenyl which is substituted by one or more same or different substituents selected from the group consisting of -SO₃H, -COOH, -OH and -CH₂-SO₃H; -COOH; a radical -COOU₄, wherein U₄ is C₁-C₂₄-alkyl which is substituted for example by -COOH, -SO₃H, -OSO₃H, -OPO₃H₂ or by a radical -NH-C(O)-O-G' wherein G' is the radical of an anionic carbohydrate; a radical -CONU₅U₆ wherein U₅ is C₁-C₂₄-alkyl which is substituted by -COOH, -SO₃H, -OSO₃H, or -OPO₃H₂ and U₆ independently has the meaning of U₅ or is hydrogen or C₁-C₁₂-alkyl; or -SO₃H; or a salt thereof, for example a sodium, potassium, ammonium or the like salt thereof.

Suitable cationic substituents R₂₁ and R₂₁' include C₁-C₁₂-alkyl which is substituted by a radical -NR₂₂R₂₂'R₂₂"⁺An⁻, wherein R₂₂, R₂₂' and R₂₂" are each independently of another hydrogen or unsubstituted or hydroxy-substituted C₁-C₆-alkyl or phenyl, and An⁻ is an anion; or a radical -C(O)OU₇, wherein U₇ is C₁-C₂₄-alkyl which is substituted by -NR₂₂R₂₂'R₂₂"⁺An⁻ and is further unsubstituted or substituted for example by hydroxy, wherein R₂₂, R₂₂', R₂₂" and An⁻ are as defined above.

Suitable zwitterionic substituents R₂₁ and R₂₁' include a radical -R₂₃-Zw, wherein R₂₃ is a direct bond or a functional group, for example a carbonyl, carbonate, amide, ester, dicarboanhydride, dicarboimide, urea or urethane group; and Zw is an aliphatic moiety comprising one anionic and one cationic group each.

The following preferences apply to the hydrophilic substituents R₂₁ and R₂₁':

### (i) non-ionic substituents:

Preferred alkyl substituents R₂₁ and R₂₁' are C₁-C₄-alkyl, in particular C₁-C₂-alkyl, which is substituted by one or more substituents selected from the group consisting of -OH and -NR₂₂R₂₂', wherein R₂₂ and R₂₂' are each independently of another hydrogen or C₁-C₄-alkyl, preferably hydrogen, methyl or ethyl and particularly preferably hydrogen or methyl, for example -CH₂-NH₂, -CH₂-N(CH₃)₂.
Preferred phenyl substituents R₂₁ and R₂₁' are phenyl which is substituted by -NH₂ or N(C₁-C₂-alkyl)₂, for example o-, m- or p-aminophenyl.
In case that the hydrophilic substituent R₂₁ or R₂₁' is a radical -COOU, U as optionally substituted alkyl is preferably C₁-C₁₂-alkyl, more preferably C₁-C₆-alkyl, even more preferably C₁-C₄-alkyl and particularly preferably C₁-C₂-alkyl, each of which being unsubstituted or substituted as mentioned above. In case that the alkyl radical U is substituted by -NR₂₂R₂₂', the above-given meanings and preferences apply for R₂₂ and R₂₂'. Examples of suitable saccharide substituents -O-G of the alkyl radical U that is substituted by -NH-C(O)-O-G are the radical of a mono- or disaccharide, for example glucose, acetyl glucose, methyl glucose, glucosamine, N-acetyl glucosamine, glucono lactone, mannose, galactose, galactosamine, N-acetyl galactosamine, fructose, maltose, lactose, fucose, saccharose or trehalose, the radical of an anhydrosaccharide such as levoglucosan, the radical of a glucosid such as octylglucosid, the radical of a sugar alcohol such as sorbitol, the radical of a sugar acid derivative such as lactobionic acid amide, or the radical of an oligosaccharide with a maximum of 8 sugar units, for example fragments of a cyclodextrin, starch, chitosan, maltotriose or maltohexaose. The radical -O-G preferably denotes the radical of a mono- or disaccharide or the radical of a cyclodextrin fragment with a maximum of 8 sugar units. Particular preferred saccharide radicals -O-G are the radical of trehalose or the radical of a cyclodextrin fragment. In case that the alkyl radical U is substituted by a radical -O-(CH₂CH₂O)₁₋₂₄-E₁ or -NH-C(O)-O-G wherein -O-G is -O-(CH₂CH₂O)₁₋₂₄-E₁, the number of (CH₂CH₂O) units is preferably from 1 to 12 in each case and more preferably from 2 to 8. E₁ is preferably hydrogen or C₁-C₂-alkyl.
U as C₅-C₈-cycloalkyl is for example cyclopentyl or preferably cyclohexyl, each of which being unsubstituted or substituted for example by 1 to 3 C₁-C₂-alkyl groups. U as C₇-C₁₂- aralkyl is for example benzyl.

Preferred nonionic radicals -COOU are those wherein U is C₁-C₆-alkyl; or C₂-C₆-alkyl which is substituted by one or two substituents selected from the group consisting of hydroxy; ; C₁-C₂-alkoxy; -O-Si(CH₃)₃; and -NR₂₂R₂₂' wherein R₂₂ and R₂₂' are each independently of another hydrogen or C₁-C₄-alkyl; or U is a radical -CH₂CH₂-O-(CH₂CH₂O)₁₋₁₂-E₁ wherein E₁ is hydrogen or C₁-C₂-alkyl; or is a radical -C₂-C₄-alkylene-NH-C(O)-O-G, wherein -O-G is the radical of a saccharide.

More preferred non-ionic radicals -COOU are those wherein U is C₁-C₄-alkyl; or C₂-C₄-alkyl which is substituted by one or two substituents selected from the group consisting of -OH and -NR₂₂R₂₂' wherein R₂₂ and R₂₂' are each independently of another hydrogen or C₁-C₂- alkyl; or a radical -CH₂CH₂-O-(CH₂CH₂O)₁₋₁₂-E₁ wherein E₁ is hydrogen or C₁-C₂-alkyl; or is a radical -C₂-C₄-alkylene-NH-C(O)-O-G wherein -O-G is the radical of a saccharide.

Particularly preferred radicals -COOU comprise those wherein U is C₁-C₂-alkyl, particularly methyl; or C₂-C₃-alkyl, which is unsubstituted or substituted by hydroxy or N,N-di-C₁-C₂-alkylamino, or is a radical -C₂-C₃-alkylene-NH-C(O)-O-G wherein -O-G is the radical of trehalose or the radical of a cyclodextrin fragment with a maximum of 8 sugar units.

Preferred non-ionic substituents -C(O)-NU₁U₂ are those wherein U₁ and U₂ are each independently of the other hydrogen or C₁-C₆-alkyl which is unsubstituted or substituted by hydroxy; or U₁ and U₂ together with the adjacent N-atom form a heterocyclic 6-membered ring having no further heteroatom or having one further N- or O-atom. Even more preferred meanings of U₁ and U₂, independently of each other, are hydrogen or C₁-C₄-alkyl which is unsubstituted or substituted by hydroxy; or U₁ and U₂ together with the adjacent N-atom form a N-C₁-C₂-alkylpiperazino or morpholino ring. Particularly preferred non-ionic radicals -C(O)-NY₁Y₂ are those wherein Y₁ and Y₂ are each independently of the other hydrogen, C₁-C₂-alkyl or hydroxy-C₁-C₂-alkyl; or Y₁ and Y₂ together with the adjacent N-atom form a morpholino ring.

Preferred non-ionic substituents -OU₃ are those wherein U₃ is hydrogen, C₁-C₄-alkyl which is unsubstituted or substituted by -NH₂ or -N(C₁-C₂-alkyl)₂, or is a group -C(O)C₁-C₂-alkyl. U₃ is particularly preferred hydrogen or acetyl.

Preferred non-ionic heterocyclic substituents R₂₁ and R₂₁' are a 5- or 6-membered heteroaromatic or heteroaliphatic radical having one N-atom and in addition no further heteroatom or an additional N- or O- heteroatom, or is a 5 to 7-membered lactame. Examples of such heterocyclic radicals are N-pyrrolidonyl, 2- or 4-pyridinyl, 2-methyl pyridin-5-yl, 2-, 3- oder 4-hydroxypyridinyl, N-ε-caprolactamyl, N-imidazolyl, 2-methytimidazol-1-yl, N-morpholinyl or 4-N-methylpiperazin-1-yl, particularly N-morpholinyl or N-pyrrolidonyl.

A group of preferred non-ionic substituents R₂₁ and R₂₁' comprises C₁-C₂-alkyl, which is unsubstituted or substituted by -OH or -NR₂₂R₂₂', wherein R₂₂ and R₂₂' are each independently of the other hydrogen or C₁-C₂-alkyl; a radical -COOU wherein U is C₁-C₄-alkyl; C₂-C₄-alkyl which is substituted by -OH, -NR₂₂R₂₂' wherein R₂₂ and R₂₂' are each independently of another hydrogen or C₁-C₂-alkyl, or U is a radical -C₂-C₄-alkylene-NH-C(O)-O-G wherein -O-G is the radical of a saccharide; a radical -C(O)-NU₁U₂, wherein U₁ and U₂ are each independently of the other hydrogen or C₁-C₆-alkyl which is unsubstituted or substituted by hydroxy, or U₁ and U₂ together with the adjacent N-atom form a heterocyclic 6-membered ring having no further heteroatom or having one further N- or O-atom; a radical -OU₃, wherein U₃ is hydrogen, C₁-C₄-alkyl which is unsubstituted or substituted by -NH₂ or -N(C₁-C₂-alkyl)₂, or is a group -C(O)C₁-C₂-alkyl; or a 5- or 6-membered heteroaromatic or heteroaliphatic radical having one N-atom and in addition no further heteroatom or an additional N-, O- or S-heteroatom, or a 5 to 7-membered lactame.

A group of more preferred non-ionic substituents R₂₁ and R₂₁' comprises a radical -COOU, wherein U is C₁-C₂-alkyl, C₂-C₃-alkyl, which is substituted by hydroxy, amino or N,N-di-C₁-C₂-alkylamino, or is a radical -C₂-C₄-alkylene-NH-C(O)-O-G wherein -O-G is the radical of trehalose or a cyclodextrin fragment with a maximum of 8 sugar units; a radical -CO-NU₁U₂, wherein U₁ and U₂ are each independently of the other hydrogen or C₁-C₄-alkyl which is unsubstituted or substituted by hydroxy, or U₁ and U₂ together with the adjacent N-atom form a N-C₁-C₂-alkylpiperazino or morpholino ring; or a heterocyclic radical selected from the group consisting of N-pyrrolidonyl, 2- or 4-pyridinyl, 2-methylpyridin-5-yl, 2-, 3- oder 4-hydroxypyridinyl, N-ε-caprolactamyl, N-imidazolyl, 2-methylimidazol-1-yl, N-morpholinyl and 4-N-methylpiperazin-1-yl.

A particularly preferred group of non-ionic substituents R₂₁ and R₂₁' comprises the radicals -COO-C₁-C₂-alkyl, -COO-(CH₂)₂₋₄-OH, -CONH₂, -CON(CH₃)₂, -CONH-(CH₂)₂-OH, 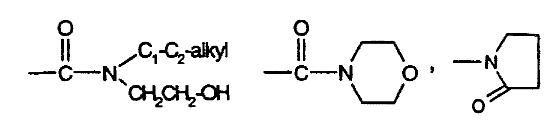 and -COO(CH₂)₂₋₄-NHC(O)-O-G wherein -O-G is the radical of trehalose.

### (ii) anionic substituents:

Preferred anionic substituents R₂₁ and R₂₁' are C₁-C₄-alkyl, in particular C₁-C₂-alkyl, which is substituted by one or more substituents selected from the group consisting of -SO₃H and -OPO₃H₂, for example -CH₂-SO₃H; phenyl which is substituted by -SO₃H or sulfomethyl, for example o-, m- or p-sulfophenyl or o-, m- or p-sulfomethylphenyl; -COOH; a radical -COOY₄, wherein U₄ is C₂-C₆-alkyl which is substituted by -COOH, -SO₃H, -OSO₃H, -OPO₃H₂, or by a radical -NH-C(O)-O-G' wherein G' is the radical of lactobionic acid, hyaluronic acid or sialic acid, in particular C₂-C₄-alkyl which is substituted by -SO₃H or -OSO₃H; a radical -CONU₅U₆ wherein U₅ is C₁-C₆-alkyl substituted by sulfo, in particular C₂-C₄-alkyl substituted by sulfo, and U₆ is hydrogen, for example the radical -C(O)-NH-C(CH₃)₂-CH₂-SO₃H; or -SO₃H; or a suitable salt thereof. Particular preferred anionic substituents R₂₁ and R₂₁' are -COOH, -SO₃H, o-, m- or p-sulfophenyl, o-, m- or p-sulfomethylphenyl or a radical -CONU₅U₆ wherein U₅ is C₂-C₄-alkyl substituted by sulfo, and U₆ is hydrogen.

### (iii) cationic substituents:

Preferred cationic substituents R₂₁ and R₂₁' are C₁-C₄-alkyl, in particular C₁-C₂-alkyl, which is in each case substituted by -NR₂₂R₂₂'R₂₂"⁺An⁻; or a radical -C(O)OU₇ wherein U₇ is C₂-C₆-alkyl, in particular C₂-C₄-alkyl, which is in each case substituted by -NR₂₂R₂₂'R₂₂"⁺An⁻ and is further unsubstituted or substituted by hydroxy. R₂₂, R₂₂' and R₂₂" are each independently of another preferably hydrogen or C₁-C₄-alkyl, more preferably methyl or ethyl and particularly preferably methyl. Examples of suitable anions An⁻ are Hal⁻, wherein Hal is halogen, for example Br⁻, F, J⁻ or particularly Cl⁻, furthermore HCO₃⁻, CO₃²⁻, H₂PO₃⁻, HPO₃²⁻, PO₃³⁻, HSO₄⁻, SO₄²⁻ or the radical of an organic acid such as OCOCH₃ and the like. A particularly preferred cationic substituent R₂₁ and R₂₁' is a radical -C(O)OU₇ wherein U₇ is C₂-C₄-alkyl, which is substituted by -N(C₁-C₂-alkyl)₃⁺An⁻ and is further substituted by hydroxy, and An⁻ is an anion, for example the radical -C(O)O-CH₂-CH(OH)-CH₂-N(CH₃)₃⁺An⁻.

### (iv) zwitterionic substituents -R₂₃-Zw:

R₂₃ is a preferably a carbonyl, ester or amide functional group and more preferably an ester group -C(O)-O-.
Suitable anionic groups of the moiety Zw are for example -COO⁻, -SO₃⁻, -OSO₃⁻, -OPO₃H⁻ or bivalent -O-PO₂⁻- or -O-PO₂⁻-O-, preferably a group -COO⁻ or -SO₃⁻ or a bivalent group - O-PO₂⁻-, and in particular a group -SO₃⁻.
Suitable cationic groups of the moiety Zw are for example a group -NR₂₂R₂₂'R₂₂"⁺ or a bivalent group -NR₂₂R₂₂'⁺-, wherein R₂₂, R₂₂' and R₂₂" are as defined above, and are each independently of the other, preferably hydrogen or C₁-C₆-alkyl, preferably hydrogen or C₁-C₄-alkyl and most preferably each methyl or ethyl.

The moiety Zw is for example C₂-C₃₀-alkyl, preferably C₂-C₁₂-alkyl, and more preferably C₃-C₈-alkyl, which is in each case uninterrupted or interrupted by -O- and substituted or interrupted by one of the above-mentioned anionic and cationic groups each, and, in addition, is further unsubstituted or substituted by a radical -OU₈, wherein U₈ is hydrogen or the acyl radical of a carboxylic acid.

U₈ is preferably hydrogen or the acyl radical of a higher fatty acid.

Zw is preferably C₂-C₁₂-alkyl and even more preferably C₃-C₈-alkyl which is substituted or interrupted by one of the above-mentioned anionic and cationic groups each, and in addition may be further substituted by a radical -OU₈.

A preferred group of zwitter-ionic substituents -R₂₃-Z corresponds to the formula

-C(O)O-(alk''')-N(R₂₂)₂ ⁺-(alk⁰)-An⁻

or

-C(O)O-(alk'''')-O-PO₂ ⁻-(O)₀₋₁-(alk''')-N(R₂₂)₃⁺

wherein R₂₂ is hydrogen or C₁-C₆-alkyl; An⁻ is an anionic group -COO-, -SO₃⁻, -OSO₃⁻ or -OPO₃H⁻, preferably -COO⁻ or -SO₃⁻ and most preferably -SO₃⁻, alk⁰ is C₁-C₁₂-alkylene, (alk'''') is C₂-C₂₄-alkylene which is unsubstituted or substituted by a radical -OU₈, U₈ is hydrogen or the acyl radical of a carboxylic acid, and (alk''') is C₂-C₈-alkylene. (alk⁰) is preferably C₂-C₈-alkylene, more preferably C₂-C₆-alkylene and most preferably C₂-C₄-alkylene. (alk'''') is preferably C₂-C₁₂-alkylene, more preferably C₂-C₆-alkylene and particularly preferably C₂-C₃-alkylene which is in each case unsubstituted or substituted by hydroxy or by a radical -OU₈. (alk''') is preferably C₂-C₄-alkylene and more preferably C₂-C₃-alkylene. R₂₂ is hydrogen or C₁-C₄-alkyl, more preferably methyl or ethyl and particularly preferably methyl. A preferred zwitterionic substituent R₂₁ and R₂₁' is of formula

-C(O)O-CH₂-CH(OU₈)-CH₂-O-PO₂ ⁻-(CH₂)₂-N(CH₃)₃ ⁺,

wherein U₈ is hydrogen or the acyl radical of a higher fatty acid.

In one embodiment of the invention R₂₁' may also be a hydrophobic substituent which includes especially those customarily used in the manufacture of contact lenses. Suitable hydrophobic substituents include, without the list being exhaustive -CN, -Cl, C₂-C₁₈-alkyl, C₁-C₁₈-haloalkyl, phenyl, C₁-C₆-alkylphenyl, C₂-C₁₀-perfluoroalkyloxycarbonyl or correspondingly partially fluorinated radicals, C₂-C₁₂-alkenyl, mono-, di- or poly(alkylsiloxyl), carbazolyl and the like. Examples of underlying hydrophobic vinylic comonomers include acrylonitrile, methacrylonitrile, styrene, chloroprene, vinyl chloride, vinylidene chloride, 1-butene, butadiene, vinyltoluene, trifluoroethyl methacrylate, hexafluoroisopropyl methacrylate, hexafluorobutyl methacrylate, tris-trimethylsilyloxy-silyl-propyl methacrylate, 3-methacryloxypropylpentamethyldisiloxane and bis(methacryloxypropyl)tetramethyidisiloxane.

(Alk") is preferably C₂-C₈-alkylene, more preferably C₂-C₆-alkylene, even more preferably C₂-C₄-alkylene and particularly preferably 1,2-ethylene. The alkylene radical (Alk") may be a branched or preferably a linear alkylene radical.

T is for example hydrogen or a radical of the chain transfer agent being used for the preparation of the telomer.

The total of (m+n) is preferably an integer from 2 to 150, more preferably from 5 to 100, even more preferably from 5 to 75 and particularly preferably from 10 to 50. In a preferred embodiment of the invention n is 0 and m is an integer from 2 to 250, preferably from 2 to 150, more preferably from 5 to 100, even more preferably from 5 to 75 and particularly preferably from 10 to 50.

A preferred group of telomer segments of formula (19) are those wherein (Alk") is C₂-C₆-alkylene, T is a monovalent group that is suitable to act as a polymerization chain-reaction terminator, m and n are each an integer of from 0 to 100 and the total of (m+n) is from 5 to 100, R₂₀ and R₂₀' are each independently of the other hydrogen or methyl, and for R₂₁ and R₂₂' each independently of the other the meanings and preferences given before apply.

A more preferred group of suitable hydrophilic telomers are those segments of formula (19), wherein (Alk") is C₂-C₄-alkylene, T is a monovalent group that is suitable to act as a polymerization chain-reaction terminator, m is an integer from 5 to 100, n is 0, R₂₀ is hydrogen or methyl, and for R₂₁ the above given meanings and preferences apply.

A particularly preferred embodiment of the invention relates to telomer segments of the formula (19) wherein (Alk") is C₂-C₄-alkylene, T is as defined before, R₂₀ is hydrogen or methyl, n is 0, m is an integer of 5 to 50, and R₂₁ is a radical -COO-C₁-C₂-alkyl, -COO-(CH₂)₂₋₄-OH, -CONH₂, -CON(CH₃)₂, -CONH-(CH₂)₂-OH, 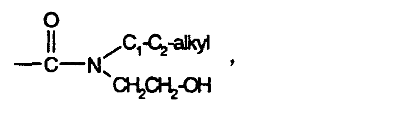 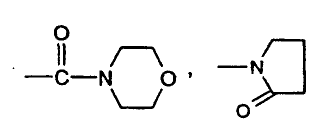 or -COO(CH₂)₂₋₄-NHC(O)-O-G wherein -O-G is the radical of trehalose.

The mean weight average molecular weight of the hydrophilic blocks B may vary within wide limits. A preferred embodiment of the invention relates to prepolymers, particularly to prepolymers for ophthalmic uses, wherein segments B have a mean molecular weight in the range from about 200 to about 10,000, preferably in the range from about 350 to about 5000 and particularly preferably in the range from about 500 to about 1,500.

Q is, for example, a crosslinkable or polymerizable group Q₁ or a hydrophilic segment comprising a crosslinkable or polymerizable group such as Q₁.

Q as a group Q₁ is, for example, a radical of formula 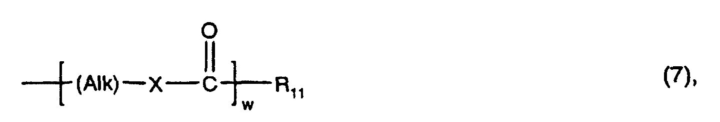 wherein (Alk) is linear or branched C₁-C₁₂-alkylene, X is -O- or -NH-, R₁₁ is an olefinically unsaturated copolymerisable radical having from 2 to 24 carbon atoms which may be further substituted, and w is the number 0 or 1.

Suitable substituents on the olefinic C₂-C₂₄ radical R₁₁ are, for example, C₁-C₄alkoxy, halogen, phenyl or carboxy. R₁₁ is, for example, a radical of formula 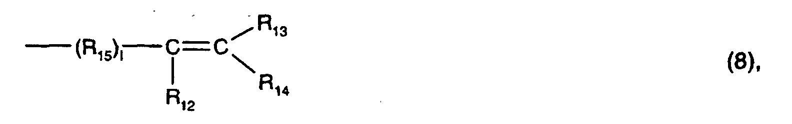 wherein I is the number 0 or 1, R₁₂ is hydrogen, C₁-C₄-alkyl or halogen, each of R₁₃ and R₁₄ independently of the other is hydrogen, C₁-C₄-alkyl, phenyl, carboxy or halogen, and R₁₅ is linear or branched C₁-C₁₂-alkylene or unsubstituted or C₁-C₄-alkyl- or C₁-C₄-alkoxy-substituted phenylene or C₇-C₁₂-aralkylene.

When R₁₅ is a phenylene radical, it is, for example, unsubstituted or methyl- or methoxy-substituted 1,2-, 1,3- or 1,4-phenylene. Preferably, R₁₅ as a phenylene radical is 1,3- or 1,4-phenylene.

When R₁₅ is an aralkylene radical, it is, for example, unsubstituted or methyl- or methoxy-substituted benzylene, wherein the methylene group is bonded to the amine nitrogen in each case. Preferably, R₁₅ as an aralkylene radical is the 1,3- or 1,4-phenylenemethylene radical.

R₁₅ is preferably unsubstituted or methyl- or methoxy-substituted phenylene or phenylenemethylene or C₁-C₁₂alkylene, more preferably 1,3- or 1,4-phenylene or C₁-C₆alkylene, especially C₁-C₂alkylene and most preferably methylene.

I is the number 1 or, preferably, the number 0. R₁₂ is preferably hydrogen, methyl or chlorine and most preferably hydrogen or methyl.

Each of R₁₃ and R₁₄ independently of the other is preferably hydrogen, carboxy, chlorine, methyl or phenyl. In a preferred embodiment of the invention, R₁₃ is hydrogen, chlorine, methyl or phenyl and R₁₄ is hydrogen or carboxy. Most preferably, R₁₃ and R₁₄ are each hydrogen.

Examples of suitable radicals R₁₁ are vinyl, 1-methylvinyl, 2-propenyl, allyl, 2-butenyl, o-, m-or p-vinylphenyl, styryl, 2-carboxyvinyl, 2-chloro-2-carboxyvinyl, 1,2-dichloro-2-carboxyvinyl, 1,2-dimethyl-2-carboxyvinyl and 2-methyl-2-carboxyvinyl.

Especially preferred radicals R₁₁ correspond to formula (8) wherein I is 0, R₁₂ is hydrogen or methyl, R₁₃ is hydrogen, methyl, chlorine or phenyl, in particular hydrogen, and R₁₄ is carboxy or particularly hydrogen.

Other especially preferred radicals R₁₁ correspond to the above formula (8) wherein I is 1, R₁₅ is 1,3- or 1,4-phenylene or C₁-C₆-alkylene, especially C₁-C₂-alkylene, R₁₂ is hydrogen or methyl and R₁₃ and R₁₄ are each hydrogen.

(Alk) is preferably C₁-C₄-alkylene, especially methylene or 1,1-dimethylmethylene.

One group of suitable radicals L₁-Q₁ are those wherein L₁ is a radical of formula (4c) wherein X₁ is -NH- or in particular -O-, Q₁ corresponds to a radical of the above formula (7) wherein w is 0, and for R₁₁ the above given meanings and preferences apply.
A second group of suitable radicals L₁-Q₁ are those wherein L₁ is a radical of formula (4c) wherein X₁ is -NH- or in particular -O-, Q₁ corresponds to a radical of the above formula (7) wherein w is 1, and for R₁₁ the above given meanings and preferences apply.
Still another group of suitable radicals L₁-Q₁ are those wherein L₁ is a radical of formula (4e) wherein X₁ is -NH- or in particular -O-, X₂ is -NH-, Q₁ corresponds to a radical of the above formula (7) wherein w is 1, and for R₁₁ the above given meanings and preferences apply.

Especially preferred radicals -L₁-Q₁ correspond to formula 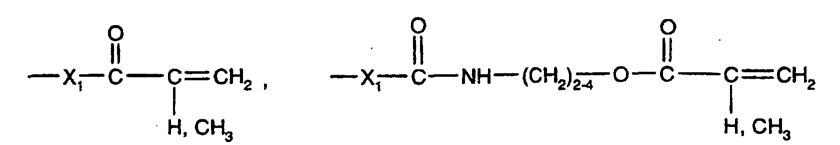 or 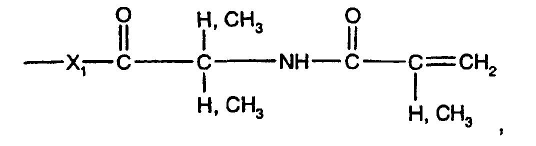 wherein X₁ is -O- or -NH-, in particular -O-.

Q as a hydrophilic segment comprising a crosslinkable or polymerizable C-C double bond group is, for example a polyoxyalkylene, such as a polyethylene glycol or polypropylene glycol or a block copolymer thereof, a poly(vinylpyrrolidone), poly(hydroxyethylacrylate), poly(hydroxyethylmethacrylate), polyacrylamide, poly(N,N-dimethylacrylamide), polyacrylic or polymethacrylic acid, a polyacyl alkylene imine, a hydrophilic telomer or a copolymeric mixture of two or more of the above-mentioned polymers which in each case comprises one or more, preferably 1, ethytenically unsaturated bond and has a weight average molecular weight of, for example, ≥100.

C-C double bond containing hydrophilic segments Q advantageously have a mean molecular weight in the range from about 200 to about 10,000, preferably in the range from about 350 to about 5000 and particularly preferably in the range from about 500 to about 1,500.

Examples of suitable C-C double bond containing hydrophilic segments Q are a radical of formula

-((alk")-O)_{c}-[(CH₂-CH₂-O)ₐ-(CHR₆-CHR₇-O)_{b}]-(alk")-L₁'-Q₂ (5a),

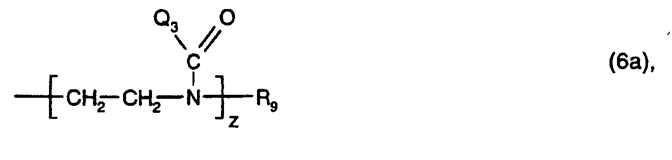

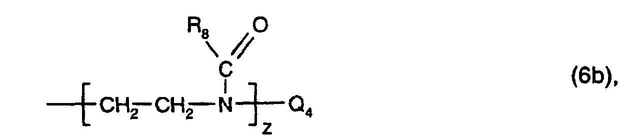

or 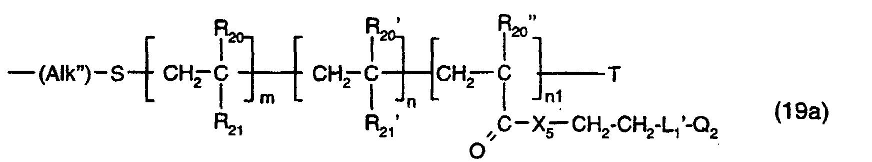 wherein for L₁' and Q₂ each the meanings and preferences given above for L₁ and Q₁ apply, Q₃ is C₃-C₁₂-alkenyl or a radical -(CH₂)₁₋₄-O-R₁₆ wherein R₁₆ is acryloyl, methacryloyl or a group -C(O)-NH-(CH₂)₂₋₄-O-C(O)-C(R₁₇)=CH₂ and R₁₇ is hydrogen or methyl, Q₄ is a radical of formula 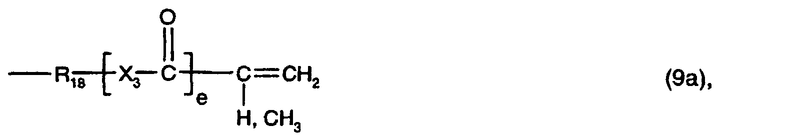 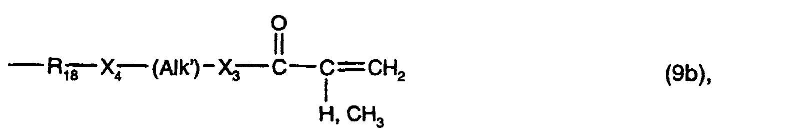 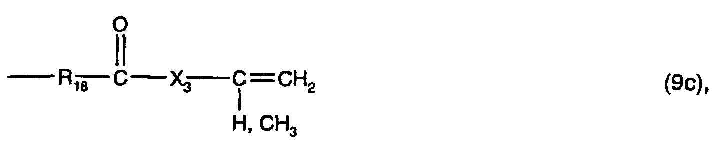 or 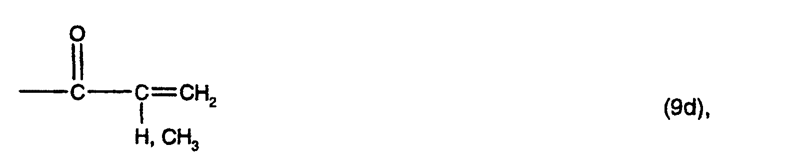 wherein X₃ is -O- or -NR, R is hydrogen or C₁-C₄-alkyl, X₄ is a group -C(O)-O-, -O-C(O)-NH- or -NH-C(O)-O-, (Alk') is C₁-C₈-alkylene, e is an integer of 0 or 1, R₁₈ is C₁-C₁₂-alkylene, phenylene or C₇-C₁₂-phenylenealkylene, X₅ is -O-, -NH- or -N(C₁-C₄-alkyl)-, n1 is an integer from 1 to 4, preferably froml to 2, R₂₀" independently has the meaning of R₂₀, and for R₆, R₇, R₈, R₉, R₂₀, R₂₀', R₂₁, R₂₁', T, (alk"), (Alk"), a, b, c, m, n and z each the above-given meanings and preferences apply.

Q₃ in formula (6a) is preferably a radical -(CH₂)₂₋₄-O-R₁₆ wherein R₁₆ is acryloyl, methacryloyl or a group -C(O)-NH-(CH₂)₂-O-C(O)-C(R₁₇)=CH₂, and R₁₇ is hydrogen or methyl.

Preferred meanings of the variables contained in formulae (9a)-(9d) are:
R is preferably methyl, ethyl or, in particular, hydrogen. X₃ in formula (9a) is preferably -O- or -NH-. X₃ in formula (9b) is preferably -NH-. X₃ in formula (9c) is preferably -O-. X₄ is preferably the radical -NH-C(O)-O-. R₁₈ is preferably C₁-C₆-alkylene or benzyl and more preferably C₁-C₄-alkylene or benzyl, and most preferably methyl, ethyl or benzyl. (Alk') is preferably C₂-C₆-alkylene and in particular C₂-C₄-alkylene. e is preferably the number 1.

Some examples of suitable radicals Q₄ are o-, m- or p-vinylbenzyl, allyl, acryloyl-C₁-C₄-alkyl, in particular acryioylethyl, methacryloyl-C₁-C₄-alkyl, in particular methacryloylethyl, acrylamido-C₁-C₄-alkyl, in particular acrylamidoethyl, methacrylamido-C₁-C₄-alkyl, in particular methacrylamidoethyl, vinyloxycarbonyl-C₁-C₄-alkyl, in particular vinyloxycarbonylmethyl or vinyloxycarbonylethyl, and vinylcarbonyl.

Q as a hydrophilic block comprising an ethylenically unsaturated group is preferably linked to A or (alk) by a linking group L₁ of formula (4a).

(alk) is preferably C₂-C₁₂-alkylene, more preferably C₃-C₁₀-alkylene and most preferably C₄-C₈-alkytene, which is in each case unsubstituted or substituted by hydroxy. (alk) is preferably linked to A by a linking group L₃ of formula (4a) or (4c).

The amphiphilic block copolymers of the invention wherein t is 0 and L₁ and L₂ are each a linking group of formula (4a) or (4b) may be prepared , for example, by reacting in any order a compound of formula

A-(X₁H)_{p+q} (10),

about (p+q) molar equivalents of a compound of formula

Y-R₁₀-Y (11),

about p molar equivalents of a compound of formula

Q-X₂H (12),

and about q molar equivalents of a compound of formula

B-X₂'H (13),

each, wherein Y is a group -N=C=O or carboxy or a suitable derivative thereof, for example a group -C(O)OH, -C(O)OR₁₉ or -C(O)-OHal wherein R₁₉ is, for example, C₁-C₄-alkyl, phenyl or benzyl and Hal is halogen, in particular bromine or chlorine, X₂' independently has the meaning of X₂, and A, B, X₁, X₂, p and q are as defined above.

For example, the compounds of formulae (12) and (13) may be first reacted with about one molar equivalent of a compound of formula (11) each, and the intermediates obtained are then reacted with the compound of formula (10). Another synthetic route comprises first reacting a compound of formula (10) with a compound of formula (11), and the intermediate obtained is then reacted with a mixture of the compounds of formulae (12) and (13).

Where the compound of formula (11) is a carboxylic acid or a derivative thereof, e.g. a carboxylic acid halide, the reaction thereof with the components of formulae (10), (12) and (13), respectively, can be carried out under the conditions that are customary for ester, thioester, or amide formation, for example at temperatures of, for example, from -40 to 80°C, preferably from 0 to 50°C and most preferably from 0 to 25°C, in a dipolar aprotic solvent, e.g. tetrahydrofuran, dioxane, DMSO or an aprotic solvent as mentioned below, or in a mixture of water and one of the mentioned solvents, in the presence of a base, e.g. an alkali metal hydroxide, and, where applicable, in the presence of a stabiliser. Suitable stabilisers are, for example, 2,6-dialkylphenols, hydroquinone derivatives, e.g. hydroquinone or hydroquinone monoalkyl ethers, or N-oxides, e.g. 4-hydroxy-2,2,6,6-tetramethyl-piperidin-1-yl. The reaction times may vary within wide limits, a period of, for example, from 30 minutes to 12 hours, preferably from 1 to 6 hours and especially from 2 to 3 hours, generally having been found practicable.

Where the compound of formula (11) is an isocyanate, the reaction thereof with the components of formulae (10), (12) and (13), respectively, can be carried out under the conditions that are customary for the formation of urethanes or ureas. In case of urethane formation it is advantageously to perform the reaction in an inert solvent. Amines of the formula (10), (12) and (13) may be reacted with the diisocyanate of formula (11) also in an aqueous medium. It is especially advantageous to use diisocyanates having isocyanate groups of differing reactivity since the formation of isomers and diadducts can thereby be substantially suppressed. The differing reactivity can be brought about, for example, by steric hindrance.

Suitable inert solvents for the reaction of the compounds of formulae (10), (12) or (13) with a compound of formula (11) are aprotic, preferably polar, solvents, for example hydrocarbons (petroleum ether, methylcyclohexane, benzene, toluene, xylene), halogenated hydrocarbons (chloroform, methylene chloride, trichloroethane, tetrachloroethane, chlorobenzene), ethers (diethyl ether, dibutyl ether, ethylene glycol dimethyl ether, diethylene glycol dimethyl ether, tetrahydrofuran, dioxane), ketones (acetone, dibutyl ketone, methyl ethyl ketone, methyl isobutyl ketone), carboxylic acid esters and lactones (ethyl acetate, butyrolactone, valerolactone), alkylated carboxylic acid amides (N,N-dimethylacetamide, N-methylpyrrolidone), nitriles (acetonitrile), sulfones and sulfoxides (dimethyl sulfoxide, tetramethylenesulfone). Polar solvents are preferably used. The reaction temperature may be, for example, from -40 to 200°C. When catalysts are used, the temperatures may advantageously be in the range of from 0 to 50°C, preferably at room temperature. Suitable catalysts are, for example, metal salts, such as ferric chloride or alkali metal salts of carboxylic acids, tertiary amines, for example (C₁-C₆alkyl)₃N (triethylamine, tri-n-butylamine), N-methylpyrrolidine, N-methylmorpholine, N,N-dimethylpiperidine, pyridine and 1,4-diaza-bicyclooctane. Tin salts have been found to be especially effective, especially alkyltin salts of carboxylic acids, for example dibutyltin dilaurate and tin dioctoate. The isolation and purification of the compounds prepared is carried out according to known methods, for example by means of extraction, crystallisation, recrystallisation or chromatographic purification methods.

The amphiphilic block copolymers of the invention wherein t is 0 and L₁ and L₂ are each a linking group of formulae (4c), (4d) or (4e) may be prepared , for example, by reacting a compound of the formula

A-(Y)_{p+q} (10a)

with about p molar equivalents of a compound of the above formula (12) and q molar equivalents of a compound of formula (13), or by reacting a compound of the above formula (10) with about p molar equivalents of a compound of formula

Q-Y (12a)

and about q molar equivalents of a compound of formula

B-Y (13a),

wherein A, B, Q, Y, p and q each have the above-mentioned meaning.

The reaction of the components of formulae (10a) and (12) and (13) or (10) and (12a) and (13a), respectively, can be carried out under the conditions that are customary for ester, thioester, amide, urethane or urea formation, for example as outlined above.

The amphiphilic block copolymers of the invention wherein p and q are each 0 and L₁ and L₂ are each a linking group of formula (4a), (4b), (4c) or (4e) may be prepared , for example, by reacting a compound of formula 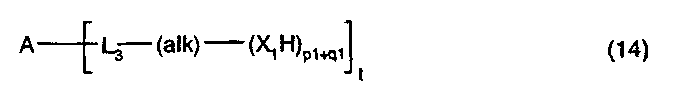 with
(i) about p1 molar equivalents of a compound of formula (12a) or the reaction product of a compound of formula (11) and (12); and
(ii) about q1 molar equivalents of a compound of formula (13a) or the reaction product of a compound of formula (11) and (13),
wherein A, L₃, X₁, (alk), p1 and q1 are each as defined above.

The reactions can be carried out under the conditions that are customary for ester, thioester, amide, urethane or urea formation, for example as outlined above. A linking group L₁ or L₂ of formula (4d) in the above amphiphilic block copolymers may be obtained, for example, by reacting a compound which is analogous to the compound of formula (14) but contains a carboxy group or an above-mentioned derivative thereof with a compound of formula (12) or (13).

The amphiphilic block copolymers of the invention wherein p and q are each 0, L₁ is a linking group of formula (4c) or (4e), L₂ is a linking group of formula (4d) and L₃ is a linking group of formula (4c) may be prepared , for example, by reacting a dilactone, for example a bis-β-lactone, bis-γ-lactone or bis-δ-lactone such as glucaro-1,4:3,6-dilactone or mannaro-1,4:3,6-ditactone, in any order with a compound of formulae (10), (12a) and (13) each.

The compounds of formula (10), (10a), (11), (12), (12a), (13) and (13a) are known or may be prepared according to processes known in the art. For example, the compounds of formula (13) or (13a), wherein B is a telomer segment are known from WO99/57581. The compounds of formula (14) are known or may be prepared according to processes known in the art, for example by reacting a compound A-(X₁H)ₜ with a compound Y₁-(alk)-(X₁'H)_{p1+q1} or 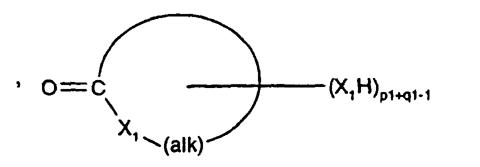 wherein X₁' independently has the meaning of X₁, Y₁ is carboxy or an above-mentioned derivative thereof, and X₁, (alk), p1 und q1 each have the above-mentioned meaning.

The molecular weight of the copolymers of the invention is, within wide limits, not critical. Preferably, however, the prepolymer has a weight average molecular weight of from approximately 1400 to 200000, preferably from 2000 to 100000 and more preferably from 2500 to 50000 and most preferably from 3000 to 25000.

The amphiphilic block copolymers of formula (1) are crosslinkable, but are uncrosslinked or, at least, substantially uncrosslinked; in addition, they are stable, that is to say spontaneous crosslinking as a result of homopolymerisation does not take place.

The amphiphilic block copolymers of formula (1) according to the invention are crosslinkable in a controlled and extremely effective manner, especially by photo-crosslinking.

The present invention further relates, therefore, to a polymer that can be obtained by photocrosslinking of a amphiphilic block copolymers of formula (1), in the presence or, preferably, in the absence of an additional vinyl comonomer. These crosslinked polymers are water-insoluble.

In the photo-crosslinking, a photoinitiator capable of initiating free-radical crosslinking is suitably added. Examples thereof will be familiar to the person skilled in the art, suitable photoinitiators that may specifically be mentioned being benzoin methyl ether, 1-hydroxycyclohexylphenyl ketone, Darocure 1173 or Irgacure types. The crosslinking can then be brought about by actinic radiation, e.g. UV light, or ionising radiation, e.g. gamma rays or X-rays. The amount of photoinitiator may be selected within wide limits, an amount of up to 0.05 g/g of polymer and especially of up to 0.01 g/g of polymer having proved beneficial.

The amphiphilic block copolymers of formula (1) is introduced into the crosslinking process preferably in pure form, particularly substantially free from undesired constituents, such as, for example, free from monomeric, oligomeric or polymeric starting compounds used for the preparation of the copolymer, and/or free from secondary products formed during the preparation of the copolymer. Said copolymers in pure form are obtained advantageously by previously purifying them in a manner known per se, for example by precipitation with a suitable solvent, filtration and washing, extraction in a suitable solvent, dialysis, reverse osmoses (RO) or ultrafiltration, reverse osmoses and ultrafiltration being especially preferred.

The preferred purification processes for the copolymers of the invention, reverse osmoses and ultrafiltration, can be carried out in a manner known per se. It is possible for the ultrafiltration and reverse osmoses to be carried out repeatedly, for example from two to ten times. Alternatively, the ultrafiltration and reverse osmoses can be carried out continuously until the selected degree of purity is attained. The selected degree of purity can in principle be as high as desired.

The copolymers of formula (1) may be crosslinked, for example, in form of a solution or a mesophase.

One embodiment of the invention relates to the photo-polymerisation of the block copolymers of the invention in solution, preferably in one or more different organic solvents. Suitable solvents are in principle all solvents that dissolve the polymers according to the invention and an optional vinyl comonomer which may be additionally used, e.g. alcohols, such as C₁-C₆- alkanols, e.g. n- or iso-propanol, ethanol or methanol, carboxylic acid amides, such as dimethylformamide, or dimethyl sulfoxide, and mixtures of suitable solvents, e.g. mixtures of water with an alcohol, e.g. a water/propanol, water/ethanol or a water/methanol mixture.

According to this embodiment of the invention, the photo-crosslinking is preferably effected from a solution comprising (i) one or more prepolymers according to the invention which can be obtained as a result of the preferred purification step, ultrafiltration, (ii) one or more solvents selected from the group consisting of a C₁-C₆- alkanol, a carboxylic acid amide, dimethyl sulfoxide and water, and optionally (iii) an additional vinyl comonomer. For example, photo-crosslinking of the block copolymers is carried out in ethanol or n- or iso-propanol.

The vinyl comonomer that can additionally be used according to the invention in the photo-crosslinking may be hydrophilic or hydrophobic or may be a mixture of a hydrophobic and a hydrophilic vinyl monomer, or may be a crosslinker. Suitable vinyl monomers include especially those which are customarily used in the manufacture of contact lenses. The expression "hydrophilic vinyl monomer" is understood to mean a monomer that typically produces as homopolymer a polymer that is water-soluble or capable of absorbing at least 10 % by weight water. Analogously, the expression "hydrophobic vinyl monomer" is understood to mean a monomer that typically produces as homopolymer a polymer that is water-insoluble or capable of absorbing less than 10 % by weight water.

The proportion of vinyl comonomers, if used, is preferably from 0.5 to 80 units per copolymer of formula (1), especially from 1 to 30 units of vinyl comonomer per copolymer unit of formula (1) and most preferably from 5 to 20 units per copolymer of formula (1).

It is also preferred to use a hydrophobic vinyl comonomer or a mixture of a hydrophobic vinyl comonomer with a hydrophilic vinyl comonomer, the mixture containing at least 50 % by weight of a hydrophobic vinyl comonomer. In that manner, the mechanical properties of the polymer can be improved without the water content being appreciably reduced. In principle, however, both conventional hydrophobic vinyl comonomers and conventional hydrophilic Vinyl comonomers are suitable for copolymerisation with a prepolymer of formula (1).

Suitable hydrophobic vinyl comonomers include, without the following being an exhaustive list, C₁-C₁₈alkyl acrylates and methacrylates, C₃-C₁₈alkylacrylamides and -methacrylamides, acrylonitrile, methacrylonitrile, vinyl-C₁-C₁₈alkanoates, C₂-C₁₈alkenes, C₂-C₁₈haloalkenes, styrene, C₁-C₆alkylstyrene, vinyl alkyl ethers in which the alkyl moiety has from 1 to 6 carbon atoms, C₂-C₁₀perfluoroalkyl acrylates and methacrylates or correspondingly partially fluorinated acrylates and methacrylates, C₃-C₁₂perfluoroalkyl-ethyl-thiocarbonylaminoethyl acrylates and methacrylates, acryloxy- and methacryloxy-alkylsiloxanes, N-vinylcarbazole, C₁-C₁₂alkyl esters of maleic acid, fumaric acid, itaconic acid, mesaconic acid and the like. Preferred are, for example, C₁-C₄alkyl esters of vinylically unsaturated carboxylic acids having from 3 to 5 carbon atoms or vinyl esters of carboxylic acids having up to 5 carbon atoms.

Examples of suitable hydrophobic vinyl comonomers include methyl acrylate, ethyl acrylate, propyl acrylate, isopropyl acrylate, cyclohexyl acrylate, 2-ethylhexyl acrylate, methyl methacrylate, ethyl methacrylate, propyl methacrylate, vinyl acetate, vinyl propionate, vinyl butyrate, vinyl valerate, styrene, chloroprene, vinyl chloride, vinylidene chloride, acrylonitrile, 1-butene, butadiene, methacrytonitrite, vinyltoluene, vinyl ethyl ether, perfluorohexylethylthiocarbonylaminoethyl methacrylate, isobomyl methacrylate, trifluoroethyl methacrylate, hexafluoroisopropyl methacrylate, hexafluorobutyl methacrylate, tris-trimethylsilyloxy-silyl-propyl methacrylate, 3-methacryloxypropylpentamethyldisiloxane and bis(methacryloxypropyl)tetramethyldisiloxane.

Suitable hydrophilic vinyl comonomers include, without the following being an exhaustive list, hydroxy-substituted lower alkyl acrylates and methacrylates, acrylamide, methacrylamide, lower alkylacrylamide and -methacrylamide, ethoxylated acrylates and methacrylates, hydroxy-substituted lower alkylacrylamides and methacrylamides, hydroxy-substituted lower alkyl vinyl ethers, sodium ethylenesulfonate, sodium styrenesulfonate, 2-acrylamido-2-methylpropanesulfonic acid, N-vinylpyrrole, N-vinylsuccinimide, N-vinylpyrrolidone, 2- or 4-vinylpyridine, acrylic acid, methacrylic acid, amino- (the term "amino" also including quaternary ammonium), mono-lower alkylamino- or di-lower alkylamino-lower alkyl acrylates and methacrylates, allyl alcohol and the like. Preferred are, for example, hydroxy-substituted C₂-C₄alkyl (meth)acrylates, five- to seven-membered N-vinyl lactams, N,N-di-C₁-C₄alkyl-(meth)acrylamides and vinylically unsaturated carboxylic acids having a total of from 3 to 5 carbon atoms.

Examples of suitable hydrophilic vinyl comonomers include hydroxyethyl methacrylate, hydroxyethyl acrylate, acrylamide, methacrylamide, dimethylacrylamide, allyl alcohol, vinylpyridine, vinylpyrrolidine, glycerol methacrylate, N-(1,1-dimethyl-3-oxobutyl)-acrylamide and the like.

Preferred hydrophobic vinyl comonomers are methyl methacrylate and vinyl acetate. Preferred hydrophilic vinyl comonomers are 2-hydroxyethyl methacylate, N-vinylpyrrolidone and acrylamide. Most preferably, the crosslinking of the copolymers of formula (1) is carried out in the absence of a vinylic comonomer.

According to another embodiment of the invention, the copolymers of formula (1) are previously converted into an aqueous mesophase, for example into a liquid crystalline phase, which is at least partly bicontinuous, and the mesophase is then subjected to photocrosslinking. The preparation and crosslinking of a suitable mesophase composition may be carried out as disclosed in PCT patent application WO 99/12059.

The solutions or mesophases comprising a block copolymer of formula (1) may be processed in a manner known *per se* to form moldings, especially contact lenses, for example by carrying out the photo-crosslinking of the copolymers of the invention in a suitable mold, in particular a contact lens mold. For example, the solution or mesophase is introduced into an opthalmic mold in a manner known per se, such as, especially, by conventional metering in, for example by dropwise introduction or by extrusion. Suitable molds are generally customary contact lens molds as known in the state of the art. Thus, the contact lenses according to the invention can be manufactured, for example, in a manner known per se, for example in a conventional "spin-casting mold", as described, for example, in US-A-3 408 429, or by the so-called Full-Mould process in a static mold, as described, for example, in US-A-4347198. Appropriate molds are made, for example, from polypropylene. Quartz, sapphire glass and metals, for example, are suitable materials for re-usable molds.

The crosslinking can be triggered in the mold, for example by actinic radiation, such as, for example, UV tight, or by ionising radiation, such as, for example, gamma radiation, electron radiation or X radiation. The crosslinking can where appropriate also be triggered thermally or electrochemically. Attention is drawn to the fact that the photocrosslinking can be carried out in a very short time, for example in ≤ 60 minutes, preferably ≤20 minutes, more preferably ≤ 5 minutes even more preferably in ≤ 1 minute, especially in up to 30 seconds, especially preferably, as disclosed in the examples.

The opening of the mold such that the molding can be removed from the mold can be carried out in a manner known per se.

The moldings obtainable from the block copolymers of formula (1) are preferably at least partly bicontinuous, that is to say the moldings have at least two partly bicontinuous phases, for example an oxygen-permeable and an ion-permeable phase, which are intermingled.

A "phase", as used herein, refers to a region of substantially uniform composition which is a distinct and physically separate portion of a heterogeneous polymeric material. However, the term "phase" does not imply that the material described is a chemically pure substance, but merely that certain bulk properties differ significantly from the properties of another phase within the material. Thus, with respect to the polymeric components of an ophthalmic molding such as a lens, an ion-permeable phase refers to a region composed of essentially only ion-permeable polymer (and water, when hydrated), while an oxygen-permeable phase refers to a region composed of essentially only oxygen-permeable polymer (and perhaps a small amount of water, when hydrated).

"Bicontinuous phases" , as used herein, refers to at least two regions, each of substantially uniform composition which differs from the other, and each of which exhibiting its individual properties. With respect to ophthalmic moldings such as contact lenses it has been found that it is highly desirable to have bicontinuous phases of an oxygen-permeable polymer and an ion-permeable polymer which provide the lens with two continuous pathways or sets of continuous pathways extending from the inner surface of the lens to the outer surface of the lens. Said at least two continuous pathways ensure that the lens material has both a high oxygen transmissibility and ion or water permeability.

The invention further relates, therefore, to moldings that comprise or, preferably, substantially consist of a crosslinked block copolymer of formula (1). Further examples of moldings of the invention, apart from contact lenses, are biomedical or special ophthalmic moldings, e.g. intraocular lenses, artificial cornea, eye dressings, moldings for use in surgery, such as heart valves, artificial arteries or the like, and films or membranes, e.g. membranes for controlling diffusion, photo-structurable films for information storage, or photoresist materials, e.g. membranes or moldings for etch resists or screen print resists.

If the molding manufactured according to the invention is a contact lens and the latter has been manufactured under solventless conditions from a previously purified prepolymer of the invention, then it is normally unnecessary for the removal of the molding to be followed by purification steps, e.g. extraction, because the prepolymers used do not contain any undesired low-molecular-weight constituents; consequently, the crosslinked product also is free or substantially free of such constituents and subsequent extraction can be dispensed with. The contact lens can accordingly be converted into a ready-for-use contact lens directly in conventional manner by hydration. Suitable forms of hydration capable of producing ready-for-use contact lenses with a wide variety of water contents are known to the person skilled in the art. The contact lens is swelled, for example, in water, in an aqueous salt solution, especially in an aqueous salt solution having an osmolarity of approximately from 200 to 450 milliosmol in 1000 ml (unit: mosm/l), preferably approximately from 250 to 350 mosm/l and especially approximately 300 mosm/l, or in a mixture of water or an aqueous salt solution with a physiologically tolerable polar organic solvent, for example glycerol. Swelling of the prepolymer in water or in aqueous salt solutions is preferred.

The aqueous salt solutions used for the hydration are advantageously solutions of physiologically tolerable salts, such as buffer salts customary in the field of contact lens care, e.g. phosphate salts, or isotonising agents customary in the field of contact lens care, such as, especially, alkali metal halides, e.g. sodium chloride, or solutions of mixtures thereof. An example of an especially suitable salt solution is a synthetic, preferably buffered, lachrymal fluid that has been matched to natural lachrymal fluid with regard to pH value and osmolarity, e.g. an unbuffered or preferably buffered, for example phosphate buffer-buffered, sodium chloride solution the osmolarity and pH value of which correspond to the osmolarity and pH value of human lachrymal fluid.

The hydration fluids defined above are preferably pure, that is to say free or substantially free of undesired constituents. Most preferably, the hydration fluid is pure water or a synthetic lachrymal fluid as described above.

If the molding manufactured according to the invention is a contact lens and the latter has been manufactured from an aqueous mesophase of a previously purified copolymer of the invention, the crosslinked product also will not contain any troublesome impurities. There is normally no need, therefore, for subsequent extraction. Since the crosslinking is carried out in an aqueous medium, there is also no need for subsequent hydration. In accordance with an advantageous embodiment, therefore, the contact lenses obtainable by this process are distinguished by the fact that they are suitable for use as intended without extraction or hydration. The expression "use as intended" is understood in this context to mean especially that the contact lenses can be inserted into the human eye.

The copolymers of the invention are especially suitable for the manufacture of mass-produced articles, such as, for example, contact lenses that are worn for a short time, for example for a month, a week or just one day, and are then replaced by new lenses. This is in particular because contact lenses prepared from a mesophase of the copolymers can be used for their intended use without subsequent treatment steps, such as extraction or hydration. The copolymers of the invention are further useful for the manufacture of biomedical devices of all kinds, for example ophthalmic moldings such as intraocular lenses or artificial cornea, wound healing dressings, eye bandages, materials for the sustained release of an active compound such as a drug delivery patch, moldings that can be used in surgery, such as heart valves, vascular grafts, catheters, artificial organs, encapsulated biologic implants, e.g. pancreatic islets, materials for prostheses such as bone substitutes, or moldings for diagnostics, membranes or biomedical instruments or apparatus.

In addition, biomedical devices, for example ophthalmic moldings such as in particular contact lenses obtainable according to the invention have a range of unusual and extremely advantageous properties and are therefore suited to extended periods of wear (true extended wear, i.e., seven days or more). Among these properties are, for example, their excellent compatibility with the human cornea and with tear fluid, which is based on a balanced ratio between water content, oxygen permeability, ion permeability and mechanical and absorptive properties.

In particular, moldings obtainable from a block copolymer of the invention do have a high surface wettability which can be demonstrated by their contact angles, their water retention and their water-film break up time or tear film break up time (TBUT).

The TBUT plays an particularly important role in the field of ophthalmic devices such as contact lenses. Thus the facile movement of an eyelid over a contact lens has proven important for the comfort of the wearer; this sliding motion is facilitated by the presence of a continuous layer of tear fluid on the contact lens, a layer which lubricates the tissue/lens interface. An increased wettability of the surface furthermore contributes substantially to low microbial adhesion and resistance to deposit formation.

The above outlined properties of the novel copolymers impart a high comfort and the absence of irritation and allergenic effects to biomedical moldings derived therefrom. Owing to their favourable permeability properties with respect to gases (CO₂ and O₂), various salts, nutrients, water and diverse other components of tear fluid, the contact lenses prepared according to the process of the invention have no effect, or virtually no effect, on the natural metabolic processes in the cornea. Furthermore, the contact lenses obtainable according to the process are optical clear and transparent, have a high shelf life and good mechanical properties, for example concerning the modulus of elasticity, elongation at break or dimensional stability.

All of the advantages mentioned above, in particular those concerning the surface wettability, apply to moldings derived from an amphiphilic block copolymer of the invention per se, that is to say without any subsequent surface treatment, e.g. coating. The block copolymers of the invention thus may be processed directly to biomedical moldings, in particular ophthalmic moldings, without any subsequent surface treatment, e.g. coating, whereas known polymeric materials in general have to be coated with an hydrophilic coating in order to be useful as a biomedical molding that comes in direct contact with the human body.

The above-mentioned advantages apply, of course, not only to ophthalmic moldings such as contact lenses but also to other moldings of the invention. The sum of the various advantageous aspects in the manufacture of the moldings of the invention results in the moldings of the invention being especially suitable as mass-produced articles, such as, for example, contact lenses that are worn for a short period and then replaced by new lenses.

In the Examples which follow, amounts are by weight, unless specified otherwise, and temperatures are given in degrees Celsius. Dynamic contact angle measurements are obtained using the dynamic Wilhelmy plate method, that is the wetting force on the solid is measured as the solid is immersed in or withdrawn from a liquid of known surface tension.

### Example 1 :

a) 11.8g (15.5 mmol) poly(ethyleneglycol) mono-methyl ether, Mₙ 750(PEG750) are dissolved in 13.8g anhydrous dichloroethane (DCE) in a round-bottomed flask. The PEG750 is dried by refluxing the water/DCE azeotrope through molecular sieves in a Soxhlet funnel. After drying, the contents of the flask is cooled, and 10.2g (45.8 mmol) isophoronediisocyante (IPDI) are then added to the flask, along with 100 mg dibutyltin dilaurate (DBTDL). The contents are mixed overnight at room temperature. The solution is poured into a separatory funnel and the excess IPDI extracted with anhydrous hexane. The waxy-liquid PEG(750)-IPDI product is drained into a RBF and solvent removed under vacuum. The product is stored under vacuum over a weekend, then under nitrogen.
(b) In a three-necked round-bottomed flask are dissolved 8.0g (1.4 mmol) of the compound of formula 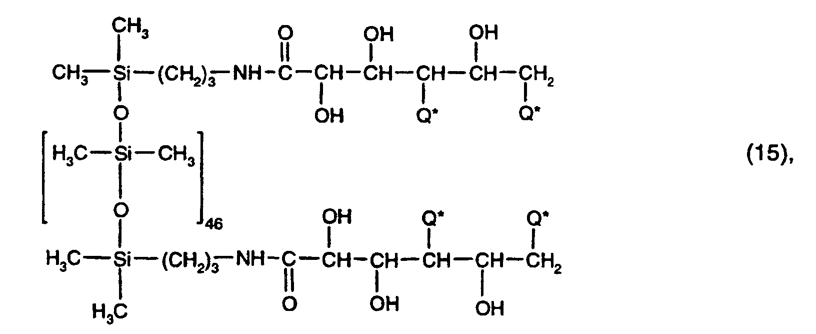 wherein Q* is a radical -O-C(O)-NH-(CH₂)₂-O-C(O)-C(CH₃)=CH₂ (synthesis see PCT application WO 96/36890) in 30g anhydrous dichloroethane. To this solution are added 4.1 g (4.1 mmol) of the PEG(750)-IPDI. The flask is equipped with a condenser, a thermometer, stir bar, and heating mantle. The mixture is stirred and heated to 45°C. DBTDL catalyst is added, and dry air is infused through the system. After 7 days, no isocyanate peak is visible in the IR, and the solution is then cooled. The solvent is removed via rotary evaporation to yield 10.2g of a product corresponding to the above formula (15), wherein 3 hydroxy groups have been substituted by a radical of formula 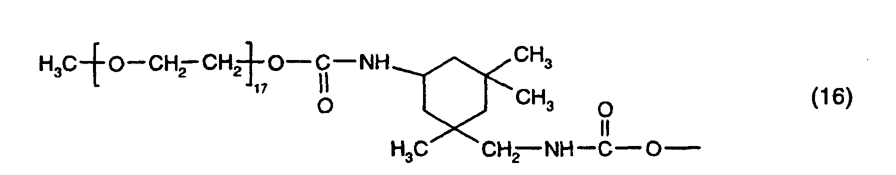
c) 0.8109g of the product obtained according to step b) are mixed with 0.2g water containing 0.01 % of a photoinitiator (Darocur® 2959). This mixture is centrifuged, refrigerated overnight, mixed, and recentrifuged until the formulation looks homogeneous and transparent. This formulation is cast on quartz plates that had been soaked overnight in KOH/isopropanol,, rinsed with ethanol, then rinsed with purified water and air dried. The films are cured for 90 seconds under a UV lamp, and extracted with an isopropanoUwater mixture. Dynamic contact angle measurements are obtained which indicate a high surface wettability of the films.

### Example 2 :

a) 15.0g (7.8 mol) poly(ethyleneglycol) mono-methyl ether, Mₙ 1900 (PEG1900) is dissolved in 20g anhydrous dichloromethane in a round-bottomed flask. The PEG1900 is dried by refluxing the water/ dichloromethane azeotrope through molecular sieves in a Soxhlet funnel. After drying, the contents of the flask are cooled, and 5.3g (24.0 mmol) isophoronediisocyante (IPDI) are added to the flask, along with 100 mg dibutyltin dilaurate (DBTDL). The contents are mixed over the weekend at room temperature. The solution is poured into a separatory funnel and the excess IPDI extracted with anhydrous hexane. The PEG-IPDI product is drained into a RBF and solvent removed under vacuum. The product is stored under vacuum.
b) In a round-bottomed flask are dissolved 5.03g (0.13 mmol) of a compound of formula 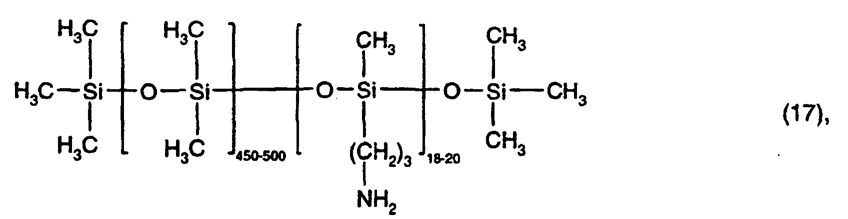 in 10.4g anhydrous dichloroethane (DCE). To this solution are added 1.9g (1.9 mmol) of the PEG(1900)-IPDI product according to step a) dissolved in 10.2g anhydrous DCE. The mixture is stirred at room temperature under nitrogen for 3.5 hours. Then 0.26g (1.7 mmol) of isocyanatoethyl methacrylate are added to the mixture, which is stirred under infused dry air a few hours, until the isocyanate peak is no longer visible in the IR. The solvent is then removed via rotary evaporation to yield a product of the above formula (17), wherein about 35 % of the amino groups are substituted by a radical of formula 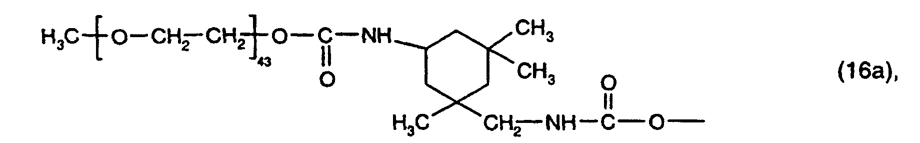 and the remaining amino groups are substituted by a radical

   -O-C(O)-NH-(CH₂)₂-O-C(O)-C(CH₃)=CH₂.
c) 1.51 g of the product obtained according to step b) are mixed with 1.51 g ethanol and 7.5 mg of a photoinitiator (Darocur® 1173). This mixture is stirred to dissolve, degassed, and cast in a dry box on quartz plates that has been soaked overnight in KOH/isopropano),, rinsed with ethanol, then rinsed with purified water and air dried. The flats are cured for 15 minutes under a UV lamp, and extracted with an isopropanot/water mixture. Dynamic contact angle measurements are obtained which indicate a high surface wettability of the flats.

### Example 3 :

(a)11.8g (15.5 mmol) poly(ethyleneglycol) mono-methyl ether (PEG750) are dissolved in 13.8g anhydrous dichloroethane (DCE) in a round-bottomed flask. The PEG750 is dried by refluxing the water/DCE azeotrope through molecular sieves in a Soxhlet funnel. After drying, the contents of the flask are cooled, and 10.2g (45.8 mmol) isophoronediisocyanate (IPDI) are added to the flask, along with 100 mg dibutyltin dilaurate (DBTDL). The contents are mixed overnight at room temperature. The solution is poured into a separatory funnel and the excess IPDI extracted with anhydrous hexane. The waxy-liquid PEG(750)-IPDI product is drained into a RBF and solvent removed under vacuum. The product is stored under vacuum over a weekend, then under nitrogen.
b) To a three-necked round-bottomed flask are added 0.87g (4.88 mmol) D(+) gluconic acid-δ-lactone, and 21 ml anhydrous tetrahydrofuran. The flask is equipped with a condenser, a thermometer, stir bar, and heating mantle. An addition funnel containing 10.00g (0.26 mmol) of the compound of formula (17) according to Example 2 is also attached, and dry nitrogen is infused through the system. The contents of the flask are heated to 38°C. The solution of the compound of formula (17) is added dropwise to the stirring gluconolactone solution. The reaction is stirred at 38°C overnight. The mixture is then cooled and stirred at room temperature over the weekend. The solvent is removed under vacuum. There are obtained 10.59g of a product according to formula (17) wherein the amino groups are each substituted by a radical of formula -NH-C(O)-CH(OH)-CH(OH)-CH(OH)-CH(OH)-CH₂-OH.
c) 4.00g (0.094 mmol) of the product obtained according to step (b) are weighted into a three-necked round-bottomed flask, along with 25.59g tetrahydrofuran. Next, 1.30g (1.32 mmol) PEG(750)-IPDI obtained according to step a) and 0.07g (0.45 mmol) isocyanatoethyl methacrylate are added to the flask, and the mixture stirred. The flask is placed atop a stir plate and equipped with heating mantle, condenser, and thermometer. Dry air is infused throught the system. The reactants are brought to 41°C, and 100 mg dibutyltin dilaurate are added to the reaction mixture. The mixture is stirred at 41°C over the weekend. The mixture is then cooled and the solvent removed under reduced pressure. 5.30g of a clear, crystalline compound corresponding to formula (17) wherein the amino groups are each substituted by a radical of formula -NH-C(O)-CH(OH)-CH(OH)-CH(OH)-CH(OH)-CH₂-OH and about 13 % of the hydroxy groups are substituted by a radical of formula 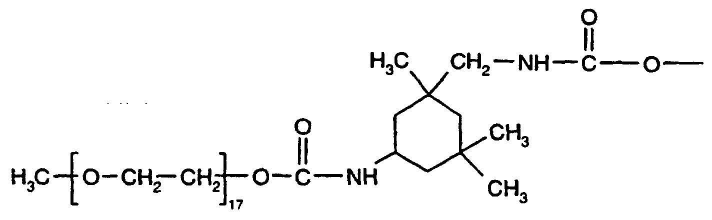 and about 4 % of the hydroxy groups are substituted by a radical of formula 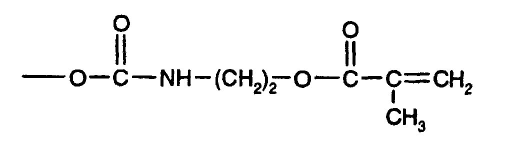 are recovered.
d) 1.1g of the product obtained according to step c) are mixed with 1.1g ethanol and 9.4mg of a photoinitiator (Darocur® 1173). This formulation is cast on quartz plates that have been soaked overnight in KOH/isopropanol,, rinsed with ethanol, then rinsed with purified water and air dried. The films are cured for 90 seconds under a UV lamp, and extracted with an isopropanol/water mixture. Dynamic contact angle measurements are obtained which indicate a high wettability of the films obtained.

### Example 4:

A 50 ml addition funnel containing 1.0g of the compound of formula 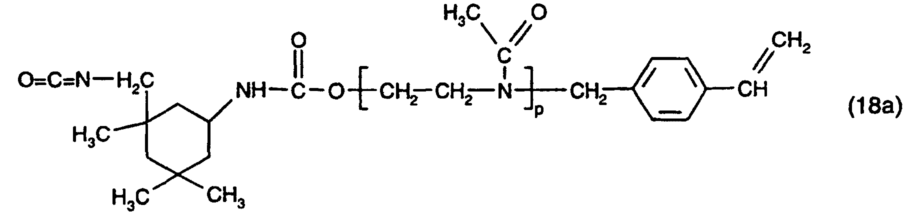 (M_{w}∼1500, synthesis from HO-(CH₂CH₂N[C(O)CH₃])ₚ-CH₂-C₆H₅-CH=CH₂) prepared according to S. Kobayashi et al., Polymer Bulletin 13, p 447-451 (1985) and isophorone diisocyanate) and and 1.0g of the compound of formula 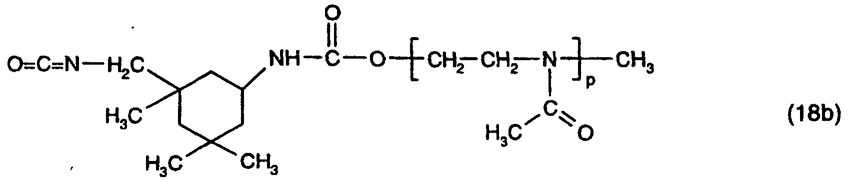 (M_{w}∼1300, synthesis from isophorone diisocyanate and HO-(CH₂CH₂N[C(O)CH₃])ₚ-CH₃ in 10.1g dry methylene chloride is placed atop a 100 ml round-bottomed flask, equipped with a stir bar and containing 3.0g of the distilled compound of formula 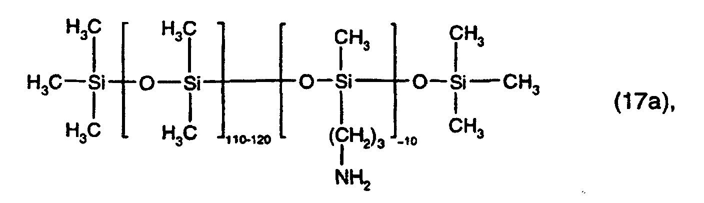 M_{w} about 10000, and 10.2g dry methylene chloride. The flask is placed atop a stir plate, and a septum placed in the add-funnel neck. Stirring is started and addition of the polymethyl oxazoline materials starts. The addition takes 40 minutes, after which the mixture is stirred an additional 4 hours at room temperature. One drop of DBTDL is added to the reaction mixture, which is stired an additional hour. The solvent is then removed via rotary evaporation.

The macromer obtained above is formulated 68.62% in water containing 0.5% of a photoinitiator (Irgacure® 2959). It is centrifuged and stirred. The formulation is cast on quartz plates, and cured for 60 seconds. Thereafter the flats are pealed off the quartz plates, placed in water and autoclaved. Dynamic contact angle measurements are obtained which indicate a high wettability of the films obtained.

Comparative Example: The manufacture of the molding above is repeated but using 2g of the compound of formula (18a) instead of the mixture of 1g each of a compound of formula (18a) and (18b). Dynamic contact angle measurements are obtained which indicate a considerable decrease in wettability compared to the molding obtained with the mixture of compounds (18a) and (18b).

### Example 5:

### (5.1) Synthesis of a bis-gluconamido-functional polydimethylsiloxane.

A 1 liter three-necked round bottom flask equipped with a magnetic stir bar, internal thermometer, and a Soxhtet-extractor filled with molecular sieves (4 angstroms pore width) and a drying tube filled with Drierite™ is charged with 200 g (0.43 mEq/g NH₂-groups) aminopropyl-terminated polydimethylsiloxane and 300 mL THF. The solution is heated to 65°C overnight, eliminating traces of water by passing the solvent repeatedly through the bed of molecular sieves. After cooling to room temperature the next morning, Karl-Fischer titration indicates 50 ppm residual water. 15.3 g (86 mmol) D-(+)-gluconic acid-delta-lactone are suspended in 100 mL dry THF and the suspension is added to the amino-PDMS solution. The mixture was heated to 40°C for two days. The turbid suspension gradually transforms to a clear solution.
The course of the reaction can be controlled by thin layer chromatography. After completion the solution is filtered through a G-3 glass filter funnel. THF is subsequently evaporated in vacuum using a rotary evaporator starting with 15 Torr and 40°C. Under a blanket of dry nitrogen the viscous mixture is transfered to a round bottom flask (brown glass) equipped with a nitrogen inlet. Total removal of THF is achieved by continued evaporation at 25°C/0.01 mbar for approximately two days. A clear colourtess rubbery material is obtained. Titration with HClO₄ in glacial acetic acid confirms that almost total conversion of amino groups is achieved (0,01 mEq/g NH₂). Hydroxyl-group titration indicates 1.88 mEq/g.

### (5.2) Synthesis of carboxy-terminated acryloyl morpholine telomer.

Under an inert atmosphere, a 1500 mL five-necked glass reactor equipped with glass propeller stirrer, internal thermometer, intensive cooler is charged with 488 mg (1.8 mmol) a,a'-azo-diisobutyramidin dihydrochloride (, 100 mL degassed deionized water and 27.7 g (0.3 mol) thioglyclic acid. A solution of 127.1 g (0.9 mol) 4-acryloyl morpholine in 300 mL degassed deionized water is added. The mixture is stirred at 60°C for four hours. After cooling to room temperature, the solution is adjusted to pH = 5 by addition of 30% KOH- solution. The mixture is diluted with distilled water to 1000 mL total volume. Salts and low molecular weight residues such as unreacted chain transfer agent are removed by reverse osmosis using a Millipore Proscale system equipped with a Millipore Helicon RO-4 Nanomax 50 membrane operating at a pressure of 10 bar. The retentate is adjusted to pH = 3 by addition of 4n HCI-solution. The product is isolated from the obtained retentate by freeze-drying. Endgroup titration indicates 1.45 mEq/g COOH-groups. Elemental analysis indicates sulfur content 4.32%.

### (5.3) Coupling of carboxy-terminated hydrophilic telomer of Example (5.2) to multi-hydroxy-functional PDMS of Example (5.1).

In a 750 mL five-necked glass reactor equipped with a glass anchor stirrer, intensive cooler, Drierite™-filled drying tube, and an internal thermometer, 14.3 g bis-gluconamido-functional polydimethylsiloxane product obtained according to (5.1) and 8.0 g carboxy-terminated acryloyl morpholine telomer obtained according to (5.2) are dissolved in 40 mL dry THE. A clear solution is formed. A solution of 2.4 g (11.8 mmol) dicyclohexyl carbodiimid and 145 mg (1.18 mmol) 4-dimethylamino pyridine in 10 mL dry THE is added. Formation of a white precipitate is observed immediately. The mixture is stirred overnight at 60°C. The next morning a few drops of water are added to convert excess carbodiimid and stirring at 60°C is continued for one more hour. After cooling to room temperature, the precipitate is filtered off and the solvent removed. The obtained solid is dissolved in 75 mL ethyl acetate and residual insoluble dicyclohexyl urea is removed by filtration. Endgroup analysis indicates 0.73 mEq/g hydroxyl-groups and 0.02 mEq/g unconverted carboxylic acid groups.

### (5.4) Reaction of isocyanatoethyl methacrylate (IEM) with hydroxyl-groups of the triblock copolymer obtained according to (5.3).

A 100 mL three-necked round bottom flask equipped with a magnetic stir bar, internal thermometer, intensive cooler and a Drierite™-filled drying tube is charged with 5 g product obtained according to (5.3) dissolved in 10 mL chloroform. 375 mg (2.42 mmol) distilled IEM is added, as well as 16 mg dibutyltin dilaurate and 12 mg triphenyl bismut. After stirring overnight at room temperature, infrared spectroscopy indicates complete conversion of the isocyanato-groups (absence of an absorption at 2270 cm⁺¹). The solvent is evaporated and the product dried under high vacuum (0.01 mbar).

### (5.5) Formulation of a photocrosslinkable macromer solution and casting and curing of contact lenses.

A centrifugation tube is charged with 4.15 g of product obtained according to (5.4) and 1.04 g n-propanol containing 1.2 weight percent of photoinitiator Darocur 2959. The components are thoroughly mixed until a homogeneous viscous solution is formed. The formulation is centrifuged at 5000 rpm for 10 minutes to remove air bubbles.
Portions of the formulation are filled into contact lens molds (PP-molds or quartz glass molds) and cured by UV-irradiation for 30 seconds with a UV intensity of 1.9 mW/cm² (Macam-lamp). After mold opening perfectly clear and colorless contact lenses are obtained having a high oxygen permeability and good mechanical properties (E-modulus, elongation at break).

### Example 6:

### (6.1) Reaction of δ-gluconolactone with IEM.

A 200 ml five-necked reaction flask equipped with reflux condenser,nitrogen inlet tube, stirrer and dropping funnel is charged with 9,97 g (56,1 mmols) of carefully dried dried δ-gluconolactone and 100 ml of dry 1,3-dioxane. The suspension formed is purged with dry nitrogen gas, and a solution of 17,4 g (112,2 mmols) of lEM and 20 mg of dibutyltin dilaurate (DBTDL) in 50 ml of dry THF is added from the dropping funnel at a temperature of 10 °C over a period of 60 minutes. The reaction mixture is kept under nitrogen and stirred at 25 °C for 8 hrs. Subsequently the reaction is completed by heating the mixture to 50 °C for another 4 hrs. until no NCO-absorption can be detected in the FTIR spectrum of the reaction mixture. The solvents are then removed by evaporation under reduced pressure. After dissolution of the residue in 500ml of dry 1,3-dioxane, filtration through a glas filter funnel, freeze drying and subsequent drying at 0,002 mbar a white powder is obtained which is kept in a refrigerator. The structure of the product is confirmed as the bis-IEM adduct of gluconolactone by NMR as well as by titration of the lactone group.

The tris-IEM- and tetrakis-IEM-adducts of gluconolactone are obtained by reacting 3 and with 4 moles of IEM with δ-gluconolactone as described above. For complete conversion 8 or 14 hrs. at 50 °C are needed as confirmed by FTIR of the reaction mixtures. The products obtained in 92 and 76 % yield are white powders The presence of the lactone group and the content of acrylic groups is confirmed by titration and by NMR.

### (6.2) Preparation of bis- and tris- adducts of glucaro-1,3;4,6-dilactone with IEM.

According to the method described under (6.1) 3,0 g (17,33 mmols) of glucaro-1,3;4,6-dilactone are reacted with a) 2,67 g (17,23 mmols), or b) 5,34 g (34,5 mmols) of IEM and 3 mg of DBTDL in 30 ml of dry THF. Reaction times of a) 18 and b) 42 hrs at 40-50 °C are used to achieve complete conversion of the isocyanate as controlled by FTIR. The structure and composition of white powdery products obtained is confirmed by NMR and titration.

### (6.3) Monoamino terminated N,N-dimethylacrylamide telomer.

A carefully degassed solution of 293,3g (3,0 mols) freshly distilled N,N-dimethyl-acrylamide, 37,2 g (0,327 mols) of cysteamine hydrochloride and 4,08 g of a,a-azodiisobutyramidine dihydrochloride in 600 ml of HPLC-grade water (pH adjusted to 3 using 10N HCl)) is slowly dropped into a 1000 reaction flask kept at 60 °C and purged with nitrogen. In order to keep the exothermic reaction under control the addition of the solution to the reaction flask occurs via a horizontal glas tube 60 cm in length and 1 cm wide which is heated to 60°C. The dropwise addititon takes overall 90 minutes. Subsequently the reaction mixture is stirred under nitrogen at 60°C for 4 hrs. The pH of the mixture is adjusted to 10.5 by addition of 1 molar sodium hydroxide solution and diluted to a total volume of 1200 mL. Salts and low molecular weight residues such as unreacted chain transfer agent are removed by reverse osmosis using a Millipore Proscale system equipped with a Millipore Helicon RO-4 Nanomax 50 membrane operating at a pressure of 15 bar. The product is isolated from the obtained retentate by freeze-drying. A white powdery product with an amine content of 0,734 mVal/g and a sulfur content of 2,15 % are obtained. The Mₙ values found are 1360 Da (H₂N- titration) or 1490 Da (S-content).

(6.4-6.8) Following the procedure outlined under (6.3) analogous N.N-dimethylacrylamide telomers of various molecular weights are prepared. The amounts of reagents used as well as the weight average molecular weights obtained are listed in Table 1:

**Table 1**

| Example | DMA [mol] | Initiator [mMol] | Chain transfer agent [mMol] | Mₙ |
|---|---|---|---|---|
| 6.4 | 2.0 | 72.8 | 10.0 | 2800¹⁾ / 3800²⁾ |
| 6.5 | 2.0 | 218.0 | 10.0 | 1520²⁾ / nm |
| 6.6 | 2.0 | 5.3 | 2.6 | 40100²⁾/ nm |
| 6.7 | 3.0 | 160.0 | 15.0 | 2300¹⁾ / 2800²⁾ |
| 6.8 | 4.0 | 436.0 | 20.0 | 1100¹⁾ / 1400²⁾ |

| | | | | |
|---|---|---|---|---|
| ¹) Calculation via GPC using PEG -standard calibration. | | | | |
| ²) Calculation from S-content. | | | | |

### (6.9) Reaction of a DMA telomer with the bis-IEM adduct of glucaro-1,3;4,6-dilactone.

11 10g ( 6,8 mmols) of the monoamino N,N-dimethylacrylamide telomer (6.5) are reacted in THF with 3,29 g (6,8 mmols) of the bis IEM adduct of glucaro-1,3;4,6-dilactone prepared under (6.2). The glucaro dilactone terminated N,N-dimethylacrylamide telomer with two polymerizable acrylic substituents at the lactone head group is isolated by freeze drying from dioxane and kept refrigerated after drying under vacuum. GPC in THF shows a monomodal molecular weight distribution and confirms that the white solid product obtained does not contain any low molecular components. Titration of the terminal lactone group results in a value of 0,503 mVal /g (theoretical value 0,511 mVaVg).

### (6.10) Triblock Copolymer with 4 polymerizable groups.

7,07g (3,56 mmoles) of the glucaramido-lactone terminated and bis IEM-substituted telomer prepared under (6.9) are dissolved in 100 ml of dry THF. To the solution is then slowly dropped a solution of 20g (1,78 mmoles) of a bis aminopropyl terminated polydimethyl-siloxane (M ∼ 11 000) over a period of 90 minutes. After addition of 20 mg of tetrakis-isopropoxi-titaniurn the reaction mixture is stirred at room temperature for 48 hrs., until the amine titration of the reaction mixture reaches a value of 0,001 mVal/g. After complete removal of the solvent at 25 - 40 °C and 2 - 0,001 mbar 26,6 g (98 %) a highly viscous material is obtained. Titration of the product confirms the absence of residual NH2 and lactone groups. NMR spectroscopy shows that the 4 methacrylic groups have remained unaffected during the coupling reaction. The triblock copolymer contains 19,5 % w/w of hydrophilic PDMA.

### Example 7: (7.1) Triblock copolymer from N,N-dimethylacrylamide telomer (H2N-PDMA), bis-aminopropyl terminated poly-dimethylsiloxane and glucaro-1,3;4,6-dilactone.

In a 100 ml 5-necked reaction flask a mixture of 0,62 g (3,56 mmols) glucaro-dilactone, 10 mg of tetrakis-isopropoxy-titanium and 20 ml dry THF is prepared, carefully degassed and purged with dry nitrogen and cooled to 0 °C. Under constant cooling with ice a solution of 20,0 g (1,78 mmols) of a bis- aminopropyl terminated polydimethylsiloxane (M - 11 000; 0,178 m Val NH2 /g) in 80 ml of dry THF is slowly added over a time period of 120 minutes. By warming up to room temperature and stirring at 25 °C for 50 hrs. the reaction is brought to completion. From the clear colouriess solution formed the solvent is completely removed by evaporation at 25 - 50 °C and 2 - 0,002 mbar. The viscous oil obtained (20,6 g) shows a lactone content of 0,17 mVal /g.
9 g (1,509 mmols lactone) of the bis- (glucaramido-lactone) terminated PDMS are dissolved in 50 ml of dry THF. To the carefully degassed solution a solution of 3,77 g ( 1,509 mmols NH2) of the monoamino terminated NN-dimethylacrytamide telomer prepared under Example (6.7) in 20 ml of dry THF is added, and the mixture is stirred under dry nitrogen for 72 hrs at 30 °C. After removal of the solvent at 40 °C and 2 - 0,002 mbar 12,7 g of a highly viscous, slightly opalescent colourless product are obtained. Titration of the content in residual amine groups (0,001 mVal/g) confirmed that the coupling of the PDMS and the PDMA segments has come to completion. (7.2-7.3) Further triblock copolymers PDMA-glucarodiamide-PDMS-glucarodiamide-PDMA. Following the procedure outlined under (7.1) two additional triblock copolymers are prepared. The amounts and specifications of the startings materials used and of the final products are summarized in Table2 .

**Table 2**

| Example | PDMS [Mₙ / g] | DMA-Telomer [Mₙ / g] | Glucarolactone [g] |
|---|---|---|---|
| 7.2 | 4600/10.0 | 2500 / 11.0¹⁾ | 0.8 |
| 7.3 | 3200/10.0 | 1400 / 8.4²⁾ | 1.1 |

| | | | |
|---|---|---|---|
| ¹) from Example (6.7); | | | |
| ²) from example (6.8) | | | |

### (7.4-7.9) Triblock copolymers PDMA-glucarodiamide-PDMS-glucarodiamide-PDMA with different grades of IEM substitution and various molecular weights.

As outlined in Example (5.4) the following triblock copolymers with IEM substituents are prepared by reaction of the glucarodiamide-linked, amphiphilic triblock copolymers prepared in Examples (7.1), (7.2) and (7.3) by reaction with various amounts of IEM in THF.
Dibutyltin dilaurate is used as a catalyst. Specifications of the products thus obtained are summarized in Table 3.

**Table 3**

| Example | Mₙ poly-DMA | Mₙ PDMS | Mₙ triblock-copolymer | Number of acrylic groups | poly-DMA contents [% w/w] |
|---|---|---|---|---|---|
| 7.4 | 2500 | 11000 | 17500 | 4 | 28.5 |
| 7.5 | 2500 | 11000 | 17350 | 3 | 29.5 |
| 7.6 | 2500 | 4600 | 10500 | 2 | 47.6 |
| 7.7 | 2500 | 4600 | 10800 | 4 | 46.2 |
| 7.8 | 1400 | 3200 | 7000 | 4 | 40.0 |
| 7.9 | 1400 | 3200 | 6700 | 2 | 41.8 |

### Example 8:

### (8.1) Carboxy terminated telomer from methacryloyloxy- polyethyleneglycolmethylether.

A 100 ml three-necked round bottom flask is charged with a solution of 50,0 g (100 mmoles) of methacryloyloxy-polyethyleneglycolmethylether (Blemer PME 400, n-9), 400,5 mg (4,35 mmoles) of thioglycolic acid, 64,7 mg (0,2 mmoles) of initiator 2,2 Azo-bis-(N,N-dimethyleneisobutyro-amidine)-dihydro-chloride and 200 ml of water (HPLC quality). To the clear solution formed 2 drops of 0,2 N aqueous HCl solution are added. Dissolved oxygen is removed from the solution by 3 repeat cycles of evacuation at 10 Torr and 5 minutes of nitrogen bubbling through the solution. The mixture is then kept under a nitrogen blanket and heated under stirring to 45 °C for two hrs., followed by 4 hrs. at 40 °C. The clear solution is then purified from low molecular weight components by 24 hrs of dialysis against distilled water using a dialysis tube with a cut-off limit of 1000 Da. The distilled water is renewed 3-times during the 24 hrs period. The clear viscous solution is then lyophilized to obtain a 32,3g (64,1 % yield) of a slightly yellowish powder. Titration of carboxy end groups give 0,07 mVal COOH / g which corresponds to an average molecular weight of 14 00 Da. (8.1 a) Preparation of the N-hydroxy-succinimide (NHS) ester derivative of a monocarboxy-terminated Polyethyleneglycol-meth-acrylate derived bottle-brush-telomer. 2g of the monocarboxy-terminated PEG-methacrylate telomer of Example (8.1) are dissolved in 20 ml of water (HPLC quality). 87 mg N-(3-dimethylaminopropyl)-N'- ethylcarbodiimide (EDC), dissolved in 1 ml HPLC water, and 60 mg of N-hydroxysuccinimide (NHS), dissolved in 1 ml HPLC water, are added to the solution, and the pH of the mixture is adjusted to 4.5 with 0.1 M HCl. The mixture is then stirred at RT for 15 minutes and filtered through 0.22 µm filter. The solution obtained after filtration is ready for a further chemical reaction.

### (8.2) Triblock copolymer composed of PEG-methacrylate bottle brush segments and a bis-gluconamidoalkyl terminated central PDMS segment.

Following the procedure outlined in Example (5.3) 2 segments (M ∼ 1400 Da ) of the monocarboxy terminated PEG-methacrylate bottle brush telomer prepared in Example (8.1) or (8.1 a) are coupled to one segment of the bis gluconamidoalkyl terminated polydimethylsiloxane (M ∼ 5000 Da) prepared in Example (5.1). The triblock copolymer thus prepared is then reacted with 4 molecules of IEM following the method described in Example (5.4) to synthesize a crosslinkable triblock macromonomer. The product thus obtained has a molecular weight of M ∼ 8500 Da and contains 33,1 % w/w of PEG segments.

### Example 9:

### (9.1) Preparation of a gluconamido terminated N,N-diimethylacryl-amide telomer

A solution of 10 g (3,67 mmols) of the monoamino terminated N,N-dimethylacrylamide telomer ( ∼ 1360 Da) prepared under Example (6.3) in 50 mt of dry THE is added to a suspension of 1,303 g (7,34 mmols) of gluconolactone in 30 ml of dry THF The reaction mixture is stirred for 48 hrs. until a clear solution is formed. After filtration through a glas filter funnel the solvent is evaporated from the solution at 0,1 - 0,002 mbar. The residue is dissolved in 250 ml distilled water and then freeze dried. After careful drying of the residue at 0,002 mbar a white powdery product is obtained. Titration of the product confirms the absence of unconverted lactone and amine groups.

### (9.2) Synthesis of polydimethylsiloxane with terminal isocyanate functions.

Under an inert atmosphere, a 750 mL five-necked glass reactor equipped with a glass anchor stirrer, interior thermometer, intensive cooler and a dropping funnel is charged with 8.03 g (36 mmol) distilled isophorone diisocyanate, 80 mg dibutyl tin dilaurate, and 100 mL dry THF. The homogeneous solution is cooled to -10°C. Hydroxyalkyl-terminated polydimethylsiloxane (Shin-Etsu KF-6003, OH-titration: 0.36 mEq/g) is degassed and dried under vacuum (0.01 mbar) at 70°C for 30 minutes. After cooling to room temperature, 100 g (36 mmol OH-groups) KF-6003 is filled into the dropping funnel and added dropwise to the diisocyanate solution during 90 minutes, maintaining the solution temperature at -10°C. The solution is stirred at 0°C for another 90 minutes. The solvent is removed on a rotary evaporator at 35°C. Residual solvent is removed under high vacuum (0.002 mbar) and a clear, colorless and viscous liquid is obtained. NCO-titration: 0.31 mEq/g (theory 0.33 mEq/g). Hydroxyl-content below detection limit.

### (9.3) Triblock copolymer from HO-PDMS-OH, IPDI and gluconamido-propyl terminated PDMA

The isocyanato terminated PDMS compound according to (9.2) is dissolved in 30 ml of dry THE and a solution of 7,43 g (7,75 mmoles) of the gluconamido terminated PDMA telomer prepared in Example (9.1) in 50 ml dry THF is added. After stirring for 10 minutes at 25 °C 20 mg of dibutyltin dilaurate are added. The reaction is brought to completion by stirring at room temperature for 12 hrs., until no OCN absorbance can be detected in the FTIR spectrum of the reaction mixture. Then the solvent is completely removed under vacuum at 25 - 40 °C and 2 - 0,01 mbar and a white solid is obtained.

### (9.4) Synthesis of a reactive macromer by reaction of IEM with the copolymer of (9.3)

The triblock copolymer of Example (9.3) is converted to a reactive macromer by reacting it with IEM in the manner as outlined in Example (5.4).

### Example 10: Contact Lenses from amphiphilic triblock copolymers.

Following the procedure outlined in Example (5.5) amphiphilic triblock macromonomers are used to prepare contact lenses. Ethanol is used as a solvent for lens casting. Properties of the lenses obtained are determined in the fully hydrated state after autoclaving. Table 4 summarizes data on surface wettability (dynamic contact angles: advancing/receding/hysteresis).

**Table 4 :**

| Example | Triblock copolymer from Example | Formulation [% w/w] | Contact Angles¹⁾ Adv./Rec./Hyst. |
|---|---|---|---|
| 10.1 | 6.10 | 68 | 93/69/17 |
| 10.2 | 7.4 | 62 | 80/53/27 |
| 10.3 | 7.5 | 65 | 73/48/25 |
| 10.4 | 7.8 | 58 | 57/39/18 |
| 10.5 | 8.2 | 68 | 63/37/26 |

| | | | |
|---|---|---|---|
| ¹) Determination with the dynamic Wilhelmy method using a Kruss K-12 instrument (Kruss GmbH, Hamburg, Germany). Wetting force on the solid is measured as the solid is immersed in or withdrawn from a liquid of known surface tension. | | | |

### Example 11:

### (11.1) Contact lenses from a copolymer network of an amphiphilic PDMA-PDMS-PDMA triblock macromonomer and a PDMS crosslinker.

Following the procedure described in Examples (10.1) to (10.5) 1,46 g of the triblock macromonomer prepared in Example (7.7) and 0,625 g of the polysiloxane of formula (15) according to Example 1 are dissolved in ethanol to form a clear solution with a content of 60 % w/w solids. With regard to the mixture of polymerizable components thus formed the overall content in hydrophilic components is ∼ 35 % w/w. Contact lenses cast from this formulation show dynamic contact angles (Adv./Rec./Hyst.) 79/46/34 as well as a high oxygen permeability and good mechanical properties.

### (11.2-11.3) Contact lenses from further PDMA-PDMS-PDMA triblock macromonomers and a PDMS crosslinker.

In anlogy to Example (11.1) contact lenses are cast and photo-cured from the triblock macromonomers prepared in Examples (7.6) and (7.9) using the multivinyl PDMS component of Example 3 as a crosslinker. The composition of the fomutations and contact angles of the lenses obtained are summarized in Table 5.

**Table 5**

| Example | Triblock copolymer from Example/Amount [g] | PDMS component from Example 3 Amount [g] | Contact Angles¹⁾ Adv./Rec./Hyst. |
|---|---|---|---|
| 11:2 | (7.6) /1.46 | 0.73 | 78/51/22 |
| 11.3 | (7.9)/1.46 | 0.73 | 82/53/31 |

| | | | |
|---|---|---|---|
| ¹) Determination see Example 10 | | | |

## Claims

1. An amphiphilic block copolymer of formula 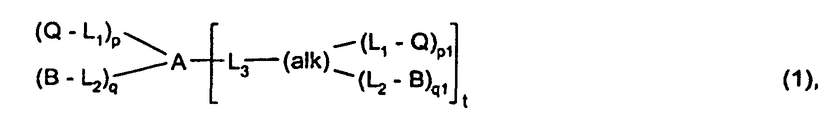 wherein A is a hydrophobic polysiloxane or perfluoroalkyl polyether segment;
B is a surface-modifying hydrophilic segment having a weight average molecular weight of ≥100 that is devoid of a crosslinkable group;
Q is a moiety comprising at least one crosslinkable ethylenically unsaturated group;
(alk) is C₂-C₂₀-alkylene which is unsubstituted or substituted by hydroxy;
L₁, L₂ and L₃ are each independently of the other a linking group;
p1 and q1 are each independently of the other an integer from 1 to 12; and either
t is 0 and p and q are each independently of the other an integer from 2 to 20; or
t is an integer from 1 to 8 and p and q are each 0.

2. An amphiphilic block copolymer according to claim 1 of formula 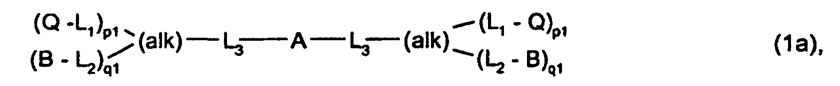 wherein A, B, L₁, L₂, L₃, Q, Calk), p1 and q1 are each as defined in claim 1.

3. An amphiphilic block copolymer according to claim 1 of formula 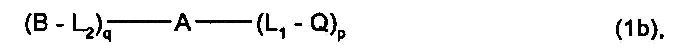 wherein A, B, L₁, L₂ and Q are each as defined in claim 1, and p and q are each independently of the other an integer from 2 to 20.

4. An amphiphilic block copolymer according to claim 1, wherein A is a polysiloxane segment of formula 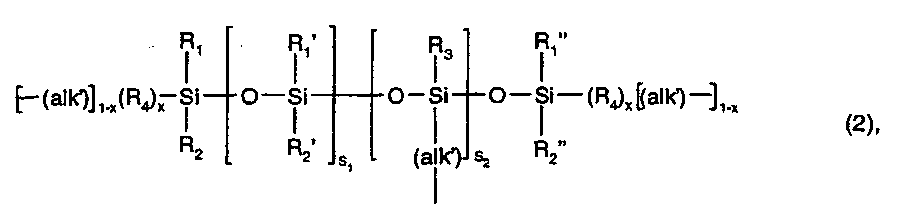 wherein (alk') is alkylene having 1 to 20 carbon atoms which may be interrupted by -O-; x is 0 or 1;
80 to 100 % of the radicals R₁, R₁', R₁", R₂, R₂', R₂", R₃ and R₄, independently of one another, are C₁-C₈-alkyl, and 0-20% of the radicals R₁, R₁', R₁", R₂, R₂', R₂", R₃ and R₄, independently of one another, are unsubstituted or C₁-C₄ alkyl- or C₁-C₄- alkoxy-substituted phenyl, fluoro(C₁-C₁₈-alkyl) or cyano(C₁-C₁₂-alkyl),
s₁ is an integer from 5 to 700;
s₂ is the sum of (p+q+t-2) if x is 0, and is the sum of (p+q+t) if x is 1; wherein p, q and t are as defined in claim 1, and
the sum (s₁+s₂) is from 5 to 700.

5. An amphiphilic block copolymer according to claim 1, wherein L₁, L₂ and L₃ are each independently of the other a bivalent linking group of formula
-X₁-C(O)-NH-R₁₀-NH-C(O)-X₂- (4a),
-X₁-C(O)-R₁₀-C(O)-X₂- (4b),
-X₁-C(O)- (4c),
-C(O)-X₂- (4d),
or
-X₁-C(O)-X₂- (4e),
wherein X₁ and X₂ are each independently of the other a group -O-, -S- or -NR₀-, R₀ is hydrogen or C₁-C₄-alkyl, and R₁₀ is linear or branched C₁-C₁₈-alkylene or unsubstituted or C₁-C₄-alkyl- or C₁-C₄-alkoxy-substituted C₆-C₁₀-arylene, C₇-C₁₈-aralkylene, C₆-C₁₀-arylene-C₁-C₂-alkylene-C₆-C₁₀-arylene, C₃-C₈-cycloalkylene, C₃-C₈-cycloalkylene-C₁-C₆-alkylene, C₃-C₈-cycloalkylene-C₁-C₂-alkylene-C₃-C₈-cycloalkylene or C₁-C₆-alkylene-C₃-C₈-cycloalkylene-C₁-C₆-alkylene.

6. An amphiphilic block copolymer according to claim 5, wherein L₁ is a linking group of formula (4a), (4c) or (4e), L₂ is a linking group of formula (4a), and L₃ is a linking group of formula (4c).

7. An amphiphilic block copolymer according to claim 1, wherein B is a non-ionic segment selected from the group consisting of a polyoxyalkylene, polysaccharid, polypeptide, poly(vinylpyrrolidone), polyalkylacrylate or -methacrylate, polyhydroxyalkylacrylate or -methacrylate, polyacyl alkylene imine, polyacryl amide, polyvinyl alcohol, polyvinyl ether and a polyol, or is a polyionic segment selected from the group consisting of a polyallylammonium, polyethyleneimine, polyvinylbenzyltrimethylammonium, polyaniline, sulfonated polyaniline, polypyrrole and polypyridinium segment, and a polyacrylic and polymethacrylic acid, a polythiophene-acetic acid, a polystyrenesulfonic acid and a zwitterionic segment, or a suitable salt thereof.

8. An amphiphilic block copolymer according to claim 1, wherein B is a telomer segment of formula 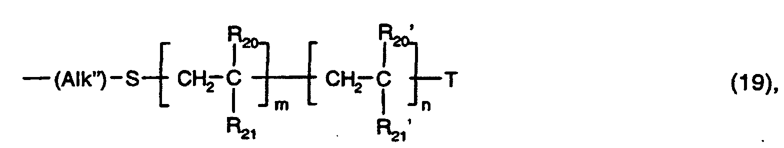 wherein (Alk") is C₂-C₁₂-alkylene,
T is a monovalent group that is suitable to act as a polymerization chain-reaction terminator, m and n are each independently of another an integer from 0 to 250, wherein the total of (m+n) is an integer from 2 to 250,
R₂₀ and R₂₀' are each independently of the other hydrogen or C₁-C₄-alkyl;
R₂₁ is a hydrophilic non-ionic, anionic, cationic or zwitterionic substituent; and
R₂₁' independently has the meaning of R₂₁.

9. An amphiphilic block copolymer according to claim 8, wherein R₂₁ and R₂₁' are each independently of the other a radical -COO-C₁-C₂-alkyl, -COO-(CH₂)₂₋₄-OH, -CONH₂, -CON(CH₃)₂, -CONH-(CH₂)₂-OH, 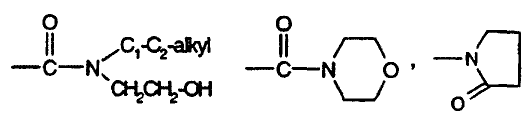 or -COO(CH₂)₂₋₄-NHC(O)-O-G wherein -O-G is the radical of trehalose.

10. An amphiphilic block copolymer according to claim 1, wherein Q is a radical Q₁ of formula 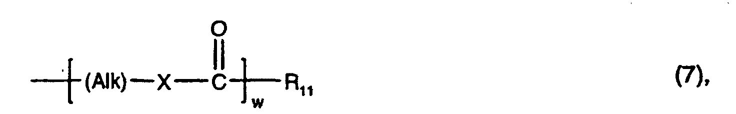 wherein (Alk) is linear or branched C₁-C₁₂-alkylene, X is -O- or -NH-, R₁₁ is an olefinically unsaturated copolymerisable radical having from 2 to 24 carbon atoms which is unsubstituted or further substituted by C₁-C₄alkoxy, halogen, phenyl or carboxy, and w is the number 0 or 1.

11. An amphiphilic block copolymer according to claim 1, wherein Q is a potyooyalkylene, poly(vinylpyrrolidone), poly(hydroxyethylacrylate), poly(hydroxyethylmethacrylate), polyacrylamide, poly(N,N-dimethylacrylamide), polyacrylic acid, polymethacrylic acid, polyacyl alkylene imine, a hydrophilic telomer or a copolymeric mixture of two or more of the above-mentioned polymers which in each case comprises one or more ethylenically unsaturated bond and has a weight average molecular weight of, for example, ≥100.

12. An amphiphilic block copolymer according to claim 11, wherein Q is a hydrophilic segment of formula
-((alk")-O)_{c}-[(CH₂-CH₂-O)ₐ-(CHR₆-CHR₇-O)_{b}]-(alk")-L₁'-Q₂ (5a) 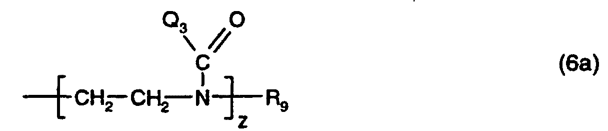
or 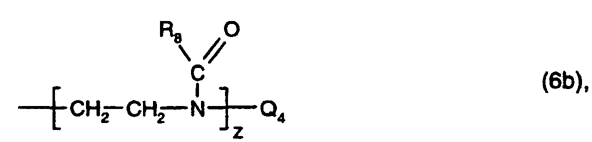 or 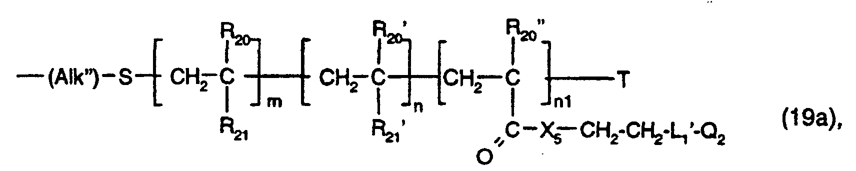 wherein L₁' is a bivalent linking group of formula
-X₁-C(O)-NH-R₁₀-NH-C(O)-X₂- (4a),
-X₁-C(O)-R₁₀-C(O)-X₂- (4b),
-X₁-C(O)- (4c),
-C(O)-X₂- (4d), or
-X₁-C(O)-X₂- (4e),
wherein X₁ and X₂ are each independently of the other a group -O-, -S- or -NR₀-, R₀ is hydrogen or C₁-C₄-alkyl, and R₁₀ is linear or branched C₁-C₁₈-alkylene or unsubstituted or C₁-C₄-alkyl- or C₁-C₄-alkoxy-substituted C₆-C₁₀-arylene, C₇-C₁₈-aralkylene, C₆-C₁₀-arylene-C₁-C₂-alkylene-C₆-C₁₀-arylene, C₃-C₈-cycloalkylene, C₃-C₈-cycloalkylene-C₁-C₆-alkylene, C₃-C₈-cycloalkylene-C₁-C₂-alkylene-C₃-C₈-cycloalkylene or C₁-C₆-alkylene-C₃-C₈-cycloalkylene-C₁-C₆-alkylene, Q₂ is a radical of formula 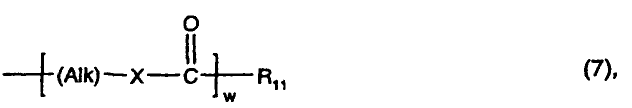 wherein (Alk) is linear or branched C₁-C₁₂-alkylene, X is -O- or -NH-, R₁₁ is an olefinically unsaturated copolymerisable radical having from 2 to 24 carbon atoms which is unsubstituted or further substituted by C₁-C₄alkoxy, halogen, phenyl or carboxy, and w is the number 0 or 1,
Q₃ is C₃-C₁₂-alkenyl or a radical -(CH₂)₁₋₄-O-R₁₆ wherein R₁₆ is acryloyl, methacryloyl or a group -C(O)-NH-(CH₂)₂₋₄-O-C(O)-C(R₁₇)=CH₂ and R₁₇ is hydrogen or methyl, Q₄ is a radical of formula 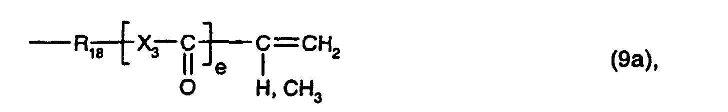 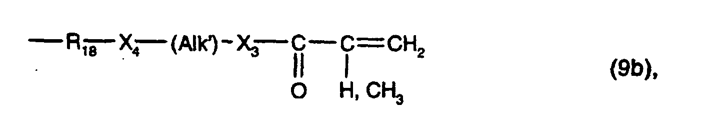 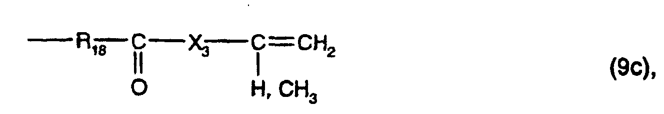 or 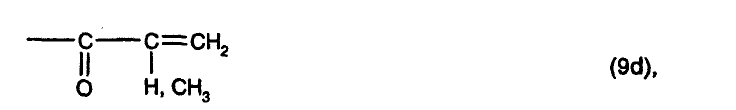 wherein X₃ is -O- or -NR, R is hydrogen or C₁-C₄-alkyl, X₄ is a group -C(O)-O-, -O-C(O)-NH- or -NH-C(O)-O-, (Alk') is C₁-C₈-alkylene, e is an integer of 0 or 1, and R₁₈ is C₁-C₁₂-alkylene, phenylene or C₇-C₁₂-phenylenealkylene,
one of the radicals R₆ and R₇ is hydrogen and the other is methyl,
(alk") is C₁-C₆-alkylene, c is the number 0 or 1, and each of a and b independently of the other is a number from 0 to 100, the sum of (a+b) being from 2 to 100,
R₈ is hydrogen; C₁-C₁₂-alkyl unsubstituted or substituted by hydroxy or fluoro and/or uninterrupted or interrupted by oxygen; C₅-C₈-cycloalkyl; phenyl; or benzyl,
R₉ is C₁-C₁₂-alkyl, benzyl, C₂-C₄-alkanoyl, benzoyl or phenyl,
(Alk") is C₂-C₁₂-alkylene,
T is a monovalent group that is suitable to act as a polymerization chain-reaction terminator, m and n are each independently of another an integer from 0 to 250, wherein the total of (m+n) is an integer from 2 to 250, n1 is an integer from 1 to 4,
R₂₀, R₂₀' and R₂₀" are each independently of the other hydrogen or C₁-C₄-alkyl;
R₂₁ and R₂₁' are each independently of the other a hydrophilic non-ionic, anionic, cationic or zwitterionic substituent;
X₅ is -O-, -NH- or -N(C₁-C₄-alkyl)- and
z is an integer from 2 to 150.

13. An amphiphilic block copolymer according to claim 2 of formula (1a), wherein A is a polysiloxane segment of formula 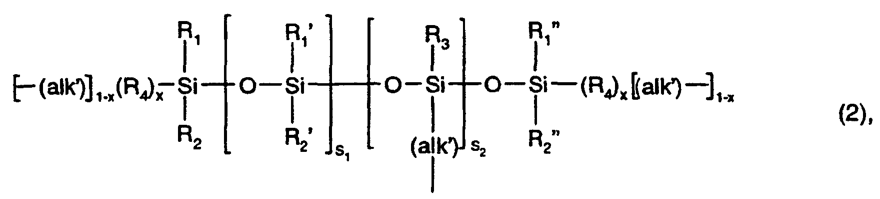 wherein x and s₂ are each 0, and R₁, R₁', R₁", R₂, R₂', R₂", R₃ and R₄ are each independently of one another C₁-C₄-alkyl, B is a polyoxyalkylene, poly(vinylpyrrolidone), poly(hydroxyethylacrylate), poly(hydroxyethylmethacrylate), polyacrylamide, poly(N,N-dimethylacrylamide), polyacrylic acid, polymethacrylic acid, polyacyl alkylene imine, hydrophilic telomer or a copolymeric mixture of two or more of the above-mentioned polymers,
L₁ is a linking group of formula
-X₁-C(O)- (4c), or
-X₁-C(O)-X₂- (4e),
L₂ is a linking group of the formula
-X₁-C(O)-NH-R₁₀-NH-C(O)-X₂- (4a), and
L₃ is a linking group of the above formula (4c),
wherein X₁ and X₂ are each independently of the other a group -0-, -S- or -NR₀-, R₀ is hydrogen or C₁-C₄-alkyl, and R₁₀ is linear or branched C₁-C₁₈-alkylene or unsubstituted or C₁-C₄-alkyl- or C₁-C₄-alkoxy-substituted C₆-C₁₀-arylene, C₇-C₁₈-aralkylene, C₆-C₁₀-arylene-C₁-C₂-alkylene-C₆-C₁₀-arylene, C₃-C₈-cycloalkylene, C₃-C₈-cycloalkylene-C₁-C₆-alkylene, C₃-C₈-cycloalkylene-C₁-C₂-alkylene-C₃-C₈-cycloalkylene or C₁-C₆-alkylene-C₃-C₈-cycloalkylene-C₁-C₆-alkylene, Q is a radical Q₁ of formula 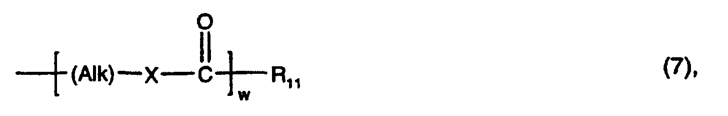 wherein (Alk) is linear or branched C₁-C₁₂-alkylene, X is -O- or -NH-, R₁₁ is an olefinically unsaturated copolymerisable radical having from 2 to 24 carbon atoms which is unsubstituted or further substituted by C₁-C₄alkoxy, halogen, phenyl or carboxy, and w is the number 0 or 1, or Q is a polyoxyalkylene, poly(vinylpyrrolidone), poly(hydroxyethyl-acrylate), poly(hydroxyethylmethacrylate), polyacrylamide, poly(N,N-dimethylacryiamide), polyacrylic acid, polymethacrylic acid, polyacyl alkylene imine, hydrophilic telomer or a copolymeric mixture of two or more of the above-mentioned polymers which in each case comprises one or more ethylenically unsaturated bond and has a weight average molecular weight of, for example, ≥100, and p1 is an integer from 1 to 6, and q1 is an integer from 1 to 8.

14. An amphiphilic block copolymer according to claim 3 of formula (1b), wherein A, B, L₁, L₂ and Q are as defined in claim 13, and p and q are each independently of the other an integer 2 to 15.

15. A process for the manufacture of a molding, which comprises crosstinking an amphiphilic block copolymer of formula (1) according to claim 1 in a mold.

16. A process according to claim 15 wherein the molding is an ophthalmic molding and wherein the block copolymer is photo-crosslinked in an ophthalmic mold using actinic radiation.

17. A molding obtainable by a process according to claim 15.

18. A molding according to claim 17, which is an ophthalmic molding, in particular a contact tens, intraocular lens or an artificial cornea.

## Patentansprüche

1. Amphiphiles Blockcopolymer der Formel 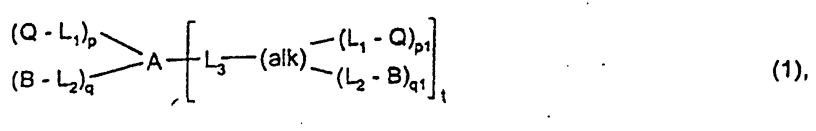 worin
A ein hydrophobes Polysiloxan- oder Perfluoralkylpolyether-Segment ist;
B ein Oberflächen-modifizierendes hydrophiles-Segment mit einem gewichtsmittleren Molekulargewicht von ≥ 100 ist, welches keine vemetzbare Gruppe aufweist;
Q eine Einheit ist, die zumindest eine vernetzbare ethylenisch ungesättigte Gruppe umfasst; (alk) C₂-C₂₀-Alkylen ist, das unsubstituiert oder durch Hydroxy substituiert ist;
L₁, L₂ und L₃ jeweils unabhängig voneinander eine verknüpfende Gruppe sind;
p1 und q1 jeweils unabhängig voneinander eine ganze Zahl von 1 bis 12 bedeuten; und entweder
t für 0 steht und p und q jeweils unabhängig voneinander eine ganze Zahl von 2 bis 20 sind; oder
t eine ganze Zahl von 1 bis 8 ist und p und q jeweils 0 sind.

2. Amphiphiles Blockcopolymer gemäß Anspruch 1 der Formel 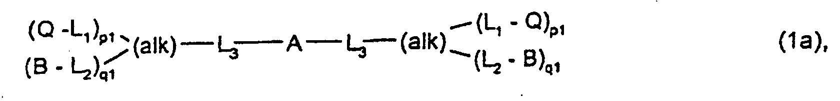 worin A, B, L₁, L₂, L₃, Q, (alk), p1 und q1 jeweils wie in Anspruch 1 definiert sind.

3. Amphiphiles Blockcopolymer gemäß Anspruch 1 der Formel 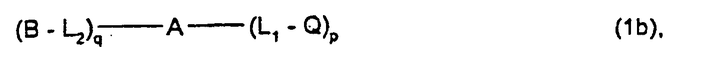 worin A, B, L₁, L₂ und Q jeweils wie in Anspruch 1 definiert sind, und p und q jeweils unabhängig voneinander eine ganze Zahl von 2 bis 20 sind.

4. Amphiphiles Blockcopolymer gemäß Anspruch 1, worin A ein Polysiloxan-Segment der Formel 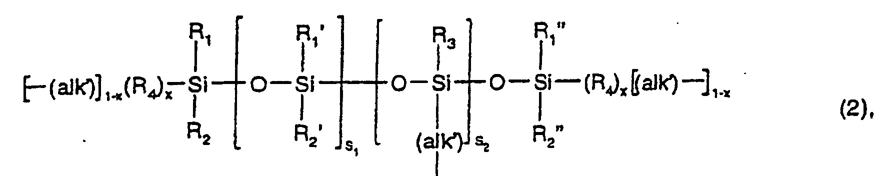 ist, worin (alk') Alkylen mit 1 bis 20 Kohlenstoffatomen bedeutet, das durch -O- unterbrochen sein kann;
x für 0 oder 1 steht;
80 bis 100 % der Reste R₁, R₁', R₁", R₂, R₂', R₂", R3 und R₄ unabhängig voneinander C₁-C₈-Alkyl bedeuten, und 0-20 % der Reste R₁, R₁', R₁", R₂, R₂', R₂", R₃ und R₄ unabhängig voneinander unsubstituiertes oder C₁-C₄-Alkyl- oder C₁-C₄-Alkoxy-substituiertes Phenyl, Fluor-(C₁-C₁₈-alkyl) oder Cyano-(C₁-C₁₂-alkyl) sind,
s₁ eine ganze Zahl von 5 bis 700 ist;
s₂ die Summe von (p+q+t-2) ist, wenn x für 0 steht, und die Summe von (p+q+t) ist, wenn x für 1 steht; worin p, q und t wie in Anspruch 1 definiert sind, und
die Summe (s₁+s₂) 5 bis 700 beträgt.

5. Amphiphiles Blockcopolymer gemäß Anspruch 1, worin L₁, L₂ und L₃ jeweils unabhängig voneinander eine zweiwertige verknüpfende Gruppe der Formel
-X₁-C(O)-NH-R₁₀-NH-C(O)-X₂- (4a),
-X₁-C(O)-R₁₀-C(O)-X₂- (4b),
-X₁-C(O)- (4c),
-C(O)-X₂- (4d),
oder
-X₁-C(O)-X₂- (4e)
sind, worin X₁ und X₂ jeweils unabhängig voneinander eine Gruppe -O-, -S- oder -NR₀sind, R₀ Wasserstoff oder C₁-C₄-Alkyl ist, und R₁₀ lineares oder verzweigtes C₁-C₁₈-Alkylen oder unsubstituiertes oder C₁-C₄-Alkyl- oder C₁-C₄-Alkoxy-substituiertes C₆-C₁₀-Arylen, C₇-C₁₈-Aralkylen, C₆-C₁₀-Arylen-C₁-C₂-alkylen-C₆-C₁₀-arylen, C₃-C₈-Cycloalkylen, C₃-C₈-Cycloalkylen-C₁-C₆-alkylen, C₃-C₈-Cycloalkylen-C₁-C₂-alkylen-C₃-C₈cycloalkylen oder C₁-C₆-Alkylen-C₃-C₈-cycloalkylen-C₁-C₆-alkylen ist.

6. Amphiphiles Blockcopolymer gemäß Anspruch 5, worin L₁ eine verknüpfende Gruppe der Formel (4a), (4c) oder (4e) ist, L₂ eine verknüpfende Gruppe der Formel (4a) ist, und L₃ eine verknüpfende Gruppe der Formel (4c) ist.

7. Amphiphiles Blockcopolymer gemäß Anspruch 1, worin B ein nicht-ionisches Segment ist, ausgewählt aus der Gruppe, bestehend aus einem Polyoxyalkylen, Polysaccharid, Polypeptid, Poly-(vinylpyrrolidon), Polyalkylacrylat oder -methacrylat, Polyhydroxyalkylacrylat, oder -methacrylat, Polyacylalkylenimin, Polyacrylamid, Polyvinylalkohol, Polyvinylether und einem Polyol, oder ein polyionisches Segment ist, ausgewählt aus der Gruppe, bestehend aus einem Polyallylammonium-, Polyethylenimin-, Polyvinylbenzyltrimethylammonium-, Polyanilin-, sulfoniertem Polyanilin-, Polypyrrol- und Polypyridiniumsegment, und einem Polyacrylsäure- und Polymethacrylsäure-, einem Polythiophenessigsäure-, einem Polystyrolsulfonsäure- und einem zwitterionischen Segment oder einem geeigneten Salz hiervon.

8. Amphiphiles Blockcopolymer gemäß Anspruch 1, worin B ein telomeres Segment der Formel 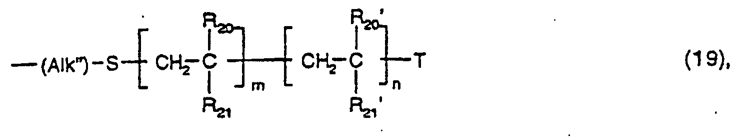 ist, worin
(Alk") C₂-C₁₂-Alkylen bedeutet,
T eine einwertige Gruppe ist, die imstande ist, als Polymerisationskettenreaktions-Terminator zu wirken,
m und n jeweils unabhängig voneinander eine ganze Zahl von 0 bis 250 sind, worin die Summe von (m+n) eine ganze Zahl von 2 bis 250 ist,
R₂₀ und R₂₀' jeweils unabhängig voneinander Wasserstoff oder C₁-C₄-Alkyl sind;
R₂₁ ein hydrophiler nicht-ionischer, anionischer, kationischer oder zwitterionischer Substituent ist; und
R₂₁' unabhängig die Bedeutung von R₂₁ besitzt.

9. Amphiphiles Blockcopolymer gemäß Anspruch 8, worin R₂₁ und R₂₁' jeweils unabhängig voneinander ein Rest-COO-C₁-C₂-Alkyl, -COO-(CH₂)₂₋₄-OH, -CONH₂, -CON(CH₃)₂, -CONH-(CH₂)₂-OH, 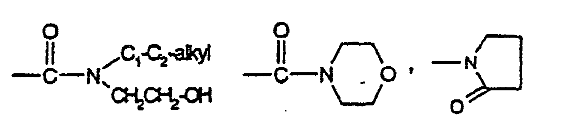 oder -COO(CH₂)₂₋₄-NHC(O)-O-G sind, worin -O-G der Rest der Trehalose ist.

10. Amphiphiles Blockcopolymer gemäß Anspruch 1, worin Q ein Rest Q₁ der Formel 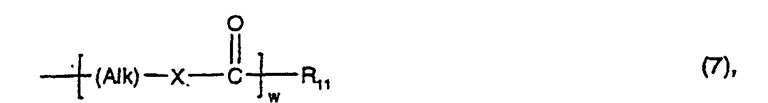 ist, worin (Alk) lineares oder verzweigtes C₁-C₁₂-Alkylen ist, X für-0- oder -NH- steht, R₁₁ ein olefinischer ungesättigter copolymerisierbarer Rest mit 2 bis 24 Kohlenstoffatomen ist, der unsubstituiert oder weiter substituiert ist durch C₁-C₄-Alkoxy, Halogen, Phenyl oder Carboxy, und w die Zahl 0 oder 1 bedeutet.

11. Amphiphiles Blockcopolymer gemäß Anspruch 1, worin Q ein Polyoxyalkylen, Poly-(vinylpyrrolidon), Poly-(hydroxyethylacrylat), Poly-(hydroxyethylmethacrylat), Polyacrylamid, Poly-(N,N-dimethylacrylamid), Polyacrylsäure, Polymethacrylsäure, Polyacylalkylenimin, ein hydrophiles Telomer oder eine copolymere Mischung von zwei oder mehreren der vorstehend genannten Polymeren ist, welches in jedem Fall eine oder mehrere ethylenisch ungesättigte Bindungen umfasst und ein gewichtsmittleres Molekulargewicht von zum Beispiel ≥ 100 besitzt.

12. Amphiphiles Blockcopolymer gemäß Anspruch 11, worin Q ein hydrophiles Segment der Formel
-((alk")-O)_{c}-[(CH₂-CH₂-O)ₐ-(CHR₆-CHR₇-O)_{b}]-(alk")-L₁'-Q₂ (5a) 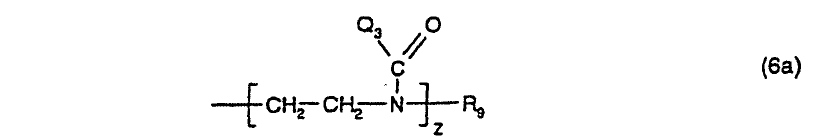
oder 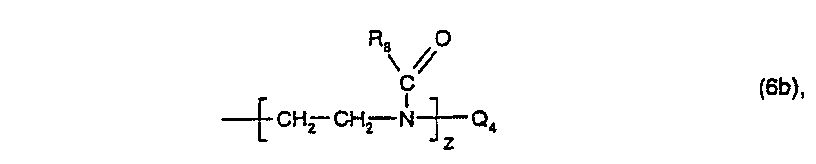 oder 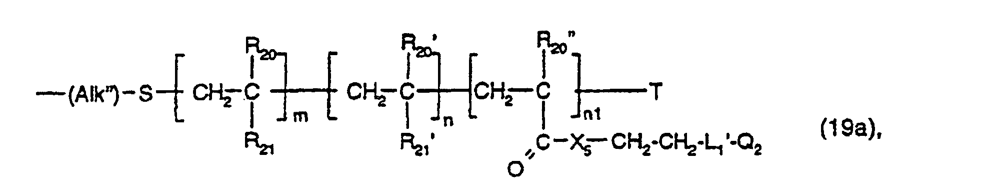 ist, worin L₁' eine zweiwertige verknüpfende Gruppe der Formel
-X₁-C(O)-NH-R₁₀-NH-C(O)-X₂- (4a),
-X₁-C(O)-R₁₀-C(O)-X₂- (4b),
-X₁-C(O)- (4c),
-C(O)-X₂- (4d),
oder
-X₁-C(O)-X₂- (4e)
ist, worin X₁ und X₂ jeweils unabhängig voneinander eine Gruppe -O-, -S- oder -NR₀sind, R₀ Wasserstoff oder C₁-C₄-Alkyl ist, und R₁₀ lineares oder verzweigtes C₁-C₁₈-Alkylen oder unsubstituiertes oder C₁-C₄-Alkyl- oder C₁-C₄-Alkoxy-substituiertes C₆-C₁₀-Arylen, C₇-C₁₈-Aralkylen, C₆-C₁₀-Arylen-C₁-C₂-alkylen-C₆-C₁₀-arylen, C₃-C₈-Cycloalkylen, C₃-C₈-Cycloalkylen-C₁-C₆-alkylen, C₃-C₈-Cycloalkylen-C₁-C₂-alkylen-C₃-C₈cycloalkylen oder C₁-C₆-Alkylen-C₃-C₈-cycloalkylen-C₁-C₆-alkylen ist, Q₂ ein Rest der Formel 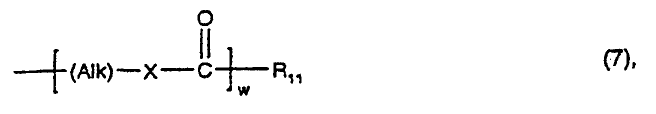 ist, worin (Alk) lineares oder verzweigtes C₁-C₁₂-Alkylen ist, X für -O- oder -NH- steht, R₁₁ ein olefinisch ungesättigter copolymerisierbarer Rest mit 2 bis 24 Kohlenstoffatomen ist, der unsubstituiert oder weiter substituiert ist durch C₁-C₄-Alkoxy, Halogen, Phenyl oder Carboxy, und w für die Zahl 0 oder 1 steht, Q₃ C₃-C₁₂-Alkenyl oder ein Rest -(CH₂)₁₋₄-O-R₁₆ ist, worin R₁₆ Acryloyl, Methacryloyl oder eine Gruppe -C(O)-NH-(CH₂)₂₋₄-O-C(O)-C(R₁₇)=CH₂ bedeutet und R₁₇ Wasserstoff oder Methyl ist,
Q₄ ein Rest der Formel 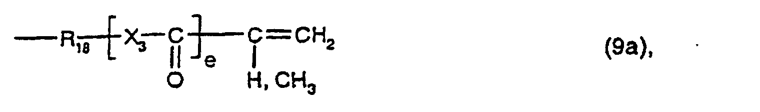 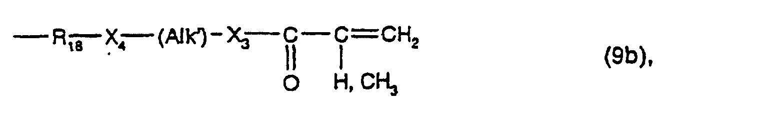 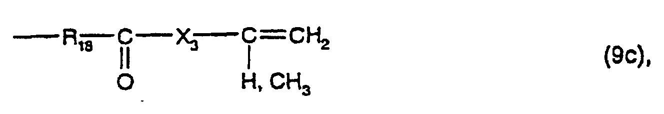 oder 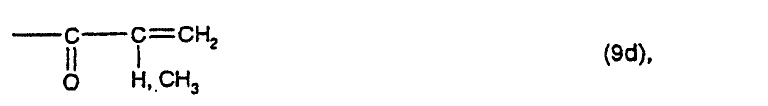 ist, worin X₃ für -O- oder -NR steht, R Wasserstoff oder C₁-C₄-Alkyl ist, X₄ eine Gruppe -C(O)-O-, -O-C(O)-NH- oder -NH-C(O)-O- ist, (Alk') C₁-C₈-Alkylen ist, e eine ganze Zahl von 0 oder 1 ist, und R₁₈ C₁-C₁₂-Alkylen, Phenylen oder C₇-C₁₂-Phenylenalkylen ist, einer der Reste R₆ und R₇ Wasserstoff ist und der andere Methyl ist,
(alk") C₁-C₆-Alkylen ist, c die Zahl 0 oder 1 ist, und ein jedes von a und b unabhängig voneinander eine Zahl von 0 bis 100 ist, wobei die Summe von (a+b) 2 bis 100 beträgt,
R₈ Wasserstoff; C₁-C₁₂-Alkyl, unsubstituiert oder substituiert durch Hydroxy oder Fluor und/oder nicht-unterbrochen oder unterbrochen durch Sauerstoff; C₅-C₈-Cycloalkyl; Phenyl; oder Benzyl bedeutet,
R₉ C₁-C₁₂-Alkyl, Benzyl, C₂-C₄-Alkanoyl, Benzoyl oder Phenyl ist,
(Alk") C₂-C₁₂-Alkylen ist,
T eine einwertige Gruppe ist, die geeignet ist, als Polymerisationskettenreaktions-Terminator zu reagieren, m und n jeweils unabhängig voneinander eine ganze Zahl von 0 bis 250 sind, worin die Summe von (m+n) eine ganze Zahl von 2 bis 250 ist, nl eine ganze Zahl von 1 bis 4 ist,
R₂₀, R₂₀' und R₂₀" jeweils unabhängig voneinander Wasserstoff oder C₁-C₄-Alkyl sind;
R₂₁ und R₂₁' jeweils unabhängig voneinander ein hydrophiler nicht-ionischer, anionischer,
kationischer oder zwitterionischer Substituent sind;
X₅ für -O-, -NH- oder -N-(C₁-C₄-Alkyl)- steht und
z eine ganze Zahl von 2 bis 150 ist.

13. Amphiphiles Blockcopolymer gemäß Anspruch 2 der Formel (1a), worin A ein Polysiloxan-Segment der Formel 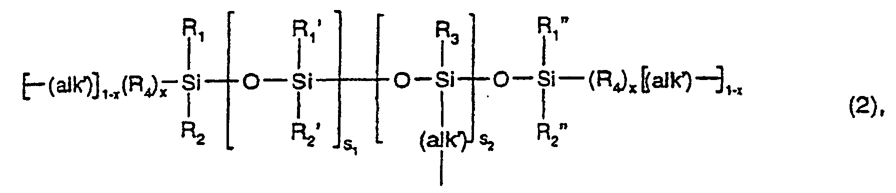 ist, worin x und s₂ jeweils für 0 stehen, und R₁, R₁', R₁", R₂, R₂', R₂", R₃ und R₄ jeweils unabhängig voneinander C₁-C₄-Alkyl sind, B ein Polyoxyalkylen, Poly-(vinylpyrrolidon), Poly-(hydroxyethylacrylat), Poly-(hydroxyethylmethacrylat), Polyacrylamid, Poly-(N,N-Dimethylacrylamid), Polyacrylsäure, Polymethacrylsäure, Polyacylalkylenimin, hydrophiles Telomer oder eine copolymere Mischung von zwei oder mehreren der vorstehend genannten Polymeren ist,
L₁ eine verknüpfende Gruppe der Formel
-X₁-C(O)- (4c),
oder
-X₁-C(O)-X₂- (4e)
ist,
L₂ eine verknüpfende Gruppe der Formel
-X₁-C(O)-NH-R₁₀-NH-C(O)-X₂- (4a)
ist, und
L₃ eine verknüpfende Gruppe der vorstehenden Formel (4c) ist,
worin X₁ und X₂ jeweils unabhängig voneinander eine Gruppe -O-, -S- oder -NR₀- sind, R₀ Wasserstoff oder C₁-C₄-Alkyl ist, und R₁₀ lineares oder verzweigtes C₁-C₁₈-Alkylen oder unsubstituiertes oder C₁-C₄-Alkyl- oder C₁-C₄-Alkoxy-substituiertes C₆-C₁₀-Arylen, C₇-C₁₈-Aralkylen, C₆-C₁₀-Arylen-C₁-C₂-alkylen-C₆-C₁₀-arylen, C₃-C₈-Cycloalkylen, C₃-C₈-Cycloalkylen-C₁-C₆-alkylen, C₃-C₈-Cycloalkylen-C₁-C₂-alkylen-C₁-C₂-cycloalkylen oder C₁-C₆-Alkylen-C₃-C₈-cycloalkylen-C₁-C₆-alkylen ist,
Q ein Rest Q₁ der Formel 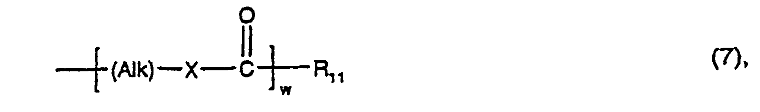 ist, worin (Alk) lineares oder verzweigtes C₁-C₁₂-Alkylen ist, X für -O- oder -NH- steht, R₁₁ ein olefinisch ungesättigter copolymerisierbarer Rest mit 2 bis 24 Kohlenstoffatomen ist, der unsubstituiert oder weiter substituiert ist durch C₁-C₄-Alkoxy, Halogen, Phenyl oder Carboxy, und w die Zahl 0 oder 1 bedeutet, oder Q ein Polyoxyalkylen, Poly-(vinylpyrrolidon), Poly-(hydroxyethylacrylat), Poly-(hydroxyethylmethacrylat), Polyacrylamid, Poly-(N,N-dimethylacrylamid), Polyacrylsäure, Polymethacrylsäure, Polyacylalkylenimin, hydrophiles Telomer oder eine copolymere Mischung von zwei oder mehreren der vorstehend genannten Polymeren ist, welches in jedem Fall eine oder mehrere ethylenisch ungesättigte Bindungen umfasst und ein gewichtsmittleres Molekulargewicht von zum Beispiel ≥ 100 besitzt, und p1 eine ganze Zahl von 1 bis 6, und q1 eine ganze Zahl von 1 bis 8 ist.

14. Amphiphiles Blockcopolymer gemäß Anspruch 3 der Formel (1b), worin A, B, L₁, L₂ und Q wie in Anspruch 13 definiert sind, und p und q jeweils unabhängig voneinander eine ganze Zahl von 2 bis 15 bedeuten.

15. Verfahren zur Herstellung eines Formgegenstands, welches das Vernetzen eines amphiphilen Blockcopolymeren der Formel (1) gemäß Anspruch 1 in einer Form umfasst.

16. Verfahren gemäß Anspruch 15, wobei der Formgegenstand eine ophthalmische Form ist und wobei das Blockcopolymere in einer ophthalmischen Form unter Verwendung von aktinischer Strahlung photo-vernetzt wird.

17. Formgegenstand, erhältlich nach einem Verfahren gemäß Anspruch 15.

18. Formgegenstand gemäß Anspruch 17, bei dem es sich um eine opthalmische Form, insbesondere eine Kontaktlinse, Intraokularlinse oder eine künstliche Comea handelt.

## Revendications

1. Copolymère à blocs amphiphile de formule 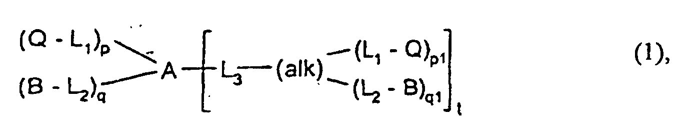 dans laquelle A est un segment de polysiloxane hydrophobe ou de polyéther perfluoroalkylique ;
B est un segment hydrophile modificateur de surface ayant un poids moléculaire moyen ≥ 100 dépourvu de groupe réticulable ;
Q est un groupement comprenant au moins un groupe réticulable à insaturation éthylénique réticulable ;
(alk) est C₂-C₂₀-alkylène non substitué ou substitué par hydroxy ;
L₁, L₂ et L₃ sont, indépendamment les uns des autres, un groupe de liaison ;
p1 et q1 sont, indépendamment l'un de l'autre, un nombre entier de 1 à 12 ; et soit, t est 0 et p et q sont, indépendamment l'un de l'autre, un nombre entier de 2 à 20 ; ou t est un nombre entier de 1 à 8 et p et q sont chacun 0.

2. Copolymère à blocs amphiphile selon la revendication 1 de formule 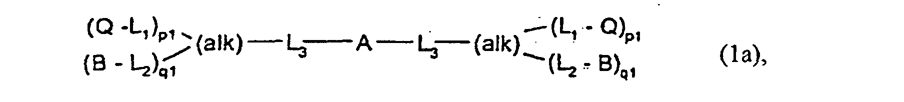 dans laquelle A, B, L₁, L₂ et L₃, Q, (alk), p1 et q1 sont tels que définis à la revendication 1.

3. Copolymère à blocs amphiphile selon la revendication 1 de formule 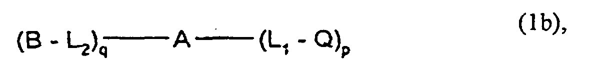 dans laquelle A, B, L₁, L₂ et Q sont tels que définis à la revendication 1 et p et q sont, indépendamment l'un de l'autre, un nombre entier de 2 à 20.

4. Copolymère à blocs amphiphile selon la revendication 1 dans lequel A est un segment de polysiloxane de formule 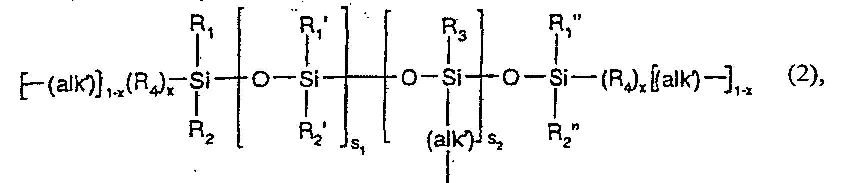 dans laquelle (alk') est alkylène ayant de 1 à 20 atomes de carbone pouvant être interrompu par -O- ;
x est 0 ou 1 ;
80 à 100% des radicaux R₁, R₁', R₁", R₂, R₂', R₂", R₃ et R₄ sont, indépendamment les uns des autres, C₁-C₈-alkyle, et 0 à 20% des radicaux R₁, R₁', R₁", R₂, R₂', R₂", R₃ et R₄ sont, indépendamment les uns des autres, phényle non substitué ou substitué par C₁-C₄-alkyle ou C₁-C₄-alcoxy, fluoro(C₁-C₁₈-alkyle) ou cyano(C₁-C₁₂-alkyle),
s₁ est un nombre entier de 5 à 700 ;
s₂ est la somme de (p+q+t-2) si x est 0 et est la somme de (p+q+t) si x est 1 ; dans laquelle p, q et t sont tels que définis à la revendication 1, et
la somme (s₁+s₂) va de 5 à 700.

5. Copolymère à blocs amphiphile selon la revendication 1 dans lequel L₁, L₂ et L₃ sont, indépendamment les uns des autres, un groupe de liaison bivalent de formule
-X₁-C(O)-NH-R₁₀-NH-C(O)-X₂- (4a),
-X₁-C(O)-R₁₀-C(O)-X₂- (4b),
-X₁-C(O)- (4c),
-C(O)-X₂- (4d)
ou
-X₁-C(O)-X₂- (4e)
dans laquelle X₁ et X₂ sont, indépendamment l'un de l'autre, un groupe -O-, -S- ou -NR₀-, R₀ est hydrogène ou C₁-C₄-alkyle et R₁₀ est C₁-C₁₈-alkylène linéaire ou ramifié ou C₆-C₁₀-arylène non substitué ou substitué par C₁-C₄-alkyle ou C₁-C₄-alcoxy, C₇-C₁₈-aralkylène, C₆-C₁₀-arylène-C₁-C₂-alkylène-C₆-C₁₀-arylène, C₃-C₈-cycloalkylène, C₃-C₈-cycloalkylène-C₁-C₆-alkylène, C₃-C₈-cycloalkylène-C₁-C₂-alkylène-C₃-C₈-cycloalkylène ou C₁-C₆-alkylène-C₃-C₈-cycloalkylène-C₁-C₆-alkylène.

6. Copolymère à blocs amphiphile selon la revendication 5, dans lequel L₁ est un groupe de liaison de formule (4a), (4c) ou (4e), L₁ est un groupe de liaison de formule (4a) et L₃ est un groupe de liaison de formule (4c).

7. Copolymère à blocs amphiphile selon la revendication 1, dans lequel B est un segment non ionique sélectionné à partir du groupe composé d'un polyoxyalkylène, polysaccharide, polypeptide, poly(vinylpyrrolidone), polyalkylacrylate ou -méthacrylate, polyhydroxyalkylacrylate ou -méthacrylate, polyacyle alkylène imine, polyacryl amide, alcool polyvinylique, éther polyvinylique et polyol, ou est un segment polyionique sélectionné à partir du groupe composé de polyallylammonium, polyéthylèneimine, polyvinylbenzyltriméthylammonium, polyaniline, polyaniline sulfatée, polypyrrole et d'un segment polypyridinium, et d'un acide polyacrylique et polyméthacrylique, d'un acide polythiophène-acétique, d'un acide polystyrènesulfonique et d'un segment zwitterionique, ou un de ses sels adéquats.

8. Copolymère à blocs amphiphile selon la revendication 1, dans lequel B est un segment télomère de formule 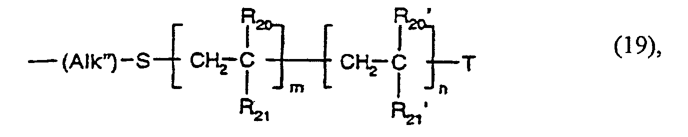 dans laquelle (Alk'') est C₂-C₁₂-alkylène,
T est un groupe monovalent pouvant agir en tant que terminateur de réaction de polymérisation en chaîne,
m et n sont, indépendamment l'un de l'autre, un nombre entier de 0 à 250, dans lequel la somme de (m+n) est un nombre entier allant de 2 à 250,
R₂₀ et R₂₀' sont, indépendamment l'un de l'autre, hydrogène ou C₁-C₄-alkyle ;
R₂₁ est un substituant hydrophile non ionique, anionique, cationique ou zwitterionique ; et
R₂₁', indépendamment, possède la signification de R₂₁.

9. Copolymère à blocs amphiphile selon la revendication 8, dans lequel R₂₁ et R₂₁' sont, indépendamment l'un de l'autre, un radical -COO-C₁-C₂-alkyle, -COO-(CH₂)₂₋₄-OH, -CONH₂, -CON(CH₃)₂, -CONH-(CH₂)₂-OH, 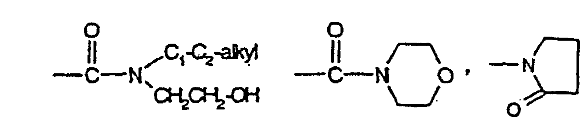 ou -COO(CH₂)₂₋₄-NHC(O)-O-G dans laquelle -O-G est le radical du tréhalose.

10. Copolymère à blocs amphiphile selon la revendication 1, dans lequel Q est un radical Q₁ de formule 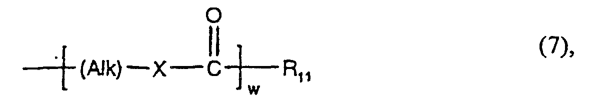 dans laquelle (Alk) est C₁-C₁₂-alkylène linéaire ou ramifié, X est -O- ou -NH-, R₁₁ est un radical copolymérisable à insaturation oléfinique ayant de 2 à 24 atomes de carbone non substitué ou substitué par C₁-C₄-alcoxy, halogène, phényle ou carboxy et w est le nombre 0 ou 1.

11. Copolymère à blocs amphiphile selon la revendication' 1, dans lequel Q est un polyoxyalkylène, un poly(vinylpyrrolidone), un poly(hydroxyéthylacrylate), un poly(hydroxyéthylméthacrylate), un polyacrylamide, un poly(N,N-diméthylacrylamide), un acide polyacrylique, un acide polyméthacrylique, une polyacyle alkylène imine, un télomère hydrophile ou un mélange copolymérique de deux ou plusieurs des polymères mentionnés ci-dessus pouvant comprendre, dans chacun des cas, une ou plusieurs liaisons à insaturation éthylénique et possédant un poids moléculaire moyen, par exemple, ≥ 100.

12. Copolymère à blocs amphiphile selon la revendication 11, dans lequel Q est un segment hydrophile de formule
-((alk''-O)_{c}-[(CH₂-CH₂-O)ₐ-(CHR₆-CHR₇-O)_{b}]-(alk'')-L₁'-Q₂ (5a) 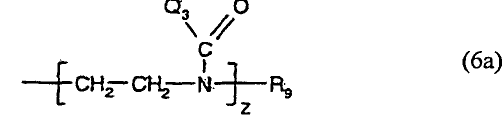
ou 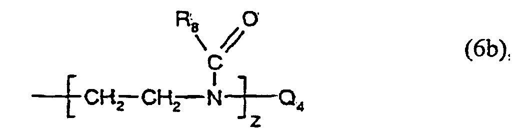 ou 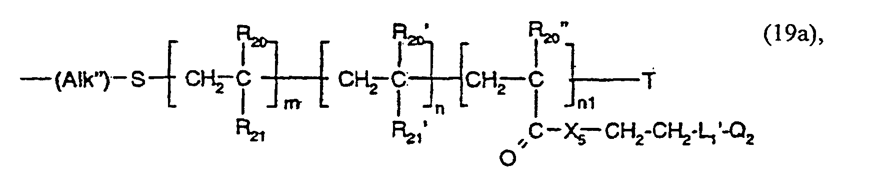 dans laquelle L₁' est un groupe de liaison bivalent de formule
-X₁-C(O)-NH-R₁₀-NH-C(O)-X₂- (4a),)
-X₁-C(O)-R₁₀-C(O)-X₂- (4b),
-X₁-C(O)- (4c),
-C(O)-X₂- (4d),
ou
-X₁-C(O)-X₂- (4e)
dans laquelle X₁ et X₂ sont, indépendamment l'un de l'autre, un groupe -O-, -S- ou -NR₀-, R₀ est hydrogène ou C₁-C₄-alkyle et R₁₀ est C₁-C₁₈-alkylène linéaire ou ramifié ou C₆-C₁₀-arylène non substitué ou substitué par C₁-C₄-alkyle ou C₁-C₄-alcoxy, C₇-C₁₈-aralkylène, C₆-C₁₀-arylène-C₁-C₂- alkylène-C₆-C₁₀-arylène, C₃-C₈-cycloalkylène, C₃-C₈-cycloalkylène-C₁-C₆-alkylène, C₃-C₈-cycloalkylène-C₁-C₂-alkylène-C₃-C₈-cycloalkylène ou C₁-C₆-alkylène-C₃-C₈-cycloalkylène-C₁-C₆-alkylène. Q₂ est un radical de formule 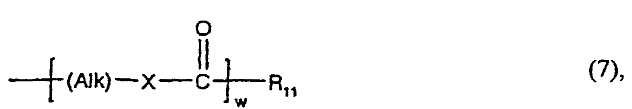 dans laquelle (Alk) est C₁-C₁₂-alkylène linéaire ou ramifié, X est -O- ou -NH-, R₁₁ est un radical copolymérisable à insaturation oléfinique ayant de 2 à 24 atomes de carbone non substitué ou substitué par C₁-C₄-alcoxy, halogène, phényle ou carboxy et w est le nombre de 0 ou 1.
Q₃ est C₃-C₁₂-alkényle ou un radical -(CH₂)₁₋₄-O-R₁₆ dans lequel R₁₆ est acryloyle, méthacryloyle ou un groupe -C(O)-NH-(CH₂)₂₋₄-O-C(O)-C-(R₁₇)=CH₂ et R₁₇ est hydrogène ou méthyle,
Q₄ est un radical de formule 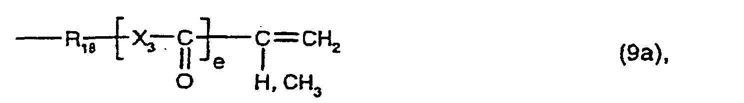 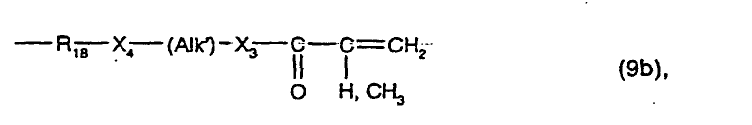 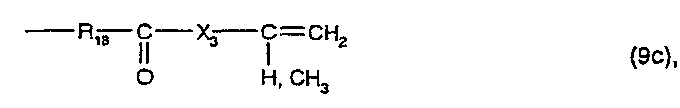 ou 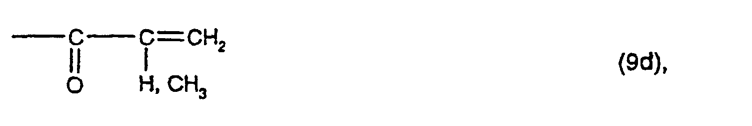 dans laquelle X₃ est -O- ou -NR, R est hydrogène ou C₁-C₄-alkyle, X₄ est un groupe -C(O)-O-, -O-C(O)-NH- ou -NH-C(O)-O-, (Alk') est C₁-C₈-alkylène,
e est un nombre entier 0 ou 1, et R₁₈ est C₁-C₁₂-alkylène, phénylène ou C₇-C₁₂-phénylènealkylène,
un des radicaux R₆ et R₇ est hydrogène et l'autre méthyle,
(alk") est C₁-C₆-alkylène, c est le nombre 0 ou 1 et chacun des a et b, indépendamment l'un de l'autre, est un nombre de 0 à 100, la somme de (a+b) allant de 2 à 100,
R₈ est hydrogène ; C₁-C₁₂-alkyle non substitué ou substitué par hydroxy ou fluoro et/ou
non interrompu ou interrompu par oxygène ; C₅-C₈-cycloalkyle ; phényle ou benzyle,
R₉ est C₁-C₁₂-alkyle, benzyle, C₂-C₄-alkanoyle, benzoyle ou phényle,
(Alk'') est C₂-C₁₂-alkylène,
T est un groupe monovalent pouvant agir en tant que terminateur de réaction de polymérisation en chaîne,
m et n sont, indépendamment l'un de l'autre, un nombre entier de 0 à 250,
dans lequel la somme de (m+n) donne un nombre entier de 2 à 250, n1 est un nombre entier de 1 à 4,
R₂₀, R₂₀' et R₂₀" sont, indépendamment les uns des autres, hydrogène ou C₁-C₄-alkyle ;
R₂₁ et R₂₁' sont, indépendamment l'un des l'autre, un substituant hydrophile non ionique, anionique, cationique ou zwitterionique ;
X₅ est -O-, -NH- ou -N(C₁-C₄-alkyl)- et
z est un nombre entier de 2 à 150.

13. Copolymère à blocs amphiphile selon la revendication 2 de formule (1a), dans lequel A est un segment de polysiloxane de formule 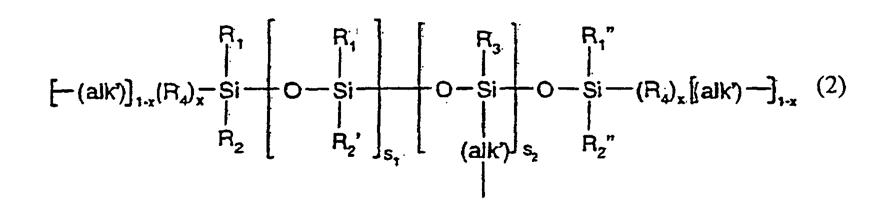 dans laquelle x et s₂ sont tous deux 0 et R₁, R₁', R₁'', R₂, R₂', R₂'', R₃ et R₄ sont, indépendamment les uns des autres, C₁-C₄-alkyle, B est un polyoxyalkylène, une poly(vinylpyrrolidone), un poly(hydroxyéthylacrylate), un poly(hydroxyéthylméthacrylate), un polyacrylarnide, un poly(N,N-diméthylacrylamide), un acide polyacrylique, un acide polyméthacrylique, une polyacyle alkylène imine, un télomère hydrophile ou un mélange copolymérique de deux ou plusieurs des polymères mentionnés ci-dessus,
L₁ est un groupe de liaison de formule
-X₁-C(O)- (4c), ou
-X₁-C(O)-X₂- (4e)
L₂ est un groupe de liaison de formule
-X₁-C(O)-NH-R₁₀-NH-C(O)-X₂- (4a), et
L₃ est un groupe de liaison de formule (4c) ci-dessus,
dans laquelle X₁ et X₂ sont, indépendamment l'un de l'autre, un groupe -O-, -S- ou -NR₀-, R₀ est hydrogène ou C₁-C₄-alkyle et R₁₀ est C₁-C₁₈-alkylène linéaire ou ramifié ou C₆-C₁₀-arylène non substitué ou substitué par C₁-C₄-alkyle ou C₁-C₄-alcoxy, C₇-C₁₈-aralkylène, C₆-C₁₀-arylène-C₁-C₂-alkylène-C₆-C₁₀-arylène, C₃-C₈-cycloalkylène, C₃-C₈-cycloalkylène-C₁-C₆-alkylène, C₃-C₈-cycloalkylène-C₁-C₂-alkylène-C₃-C₈-cycloalkylène ou C₁-C₆-alkylène-C₃-C₈-cycloalkylène-C₁-C₆-alkylène,
Q est un radical Q₁ de formule 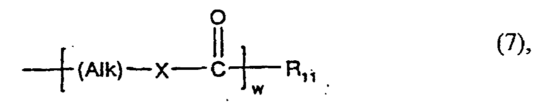 dans laquelle (Alk) est C₁-C₁₂-alkylène linéaire ou ramifié, X est -O- ou -NH-, R₁₁ est un radical copolymérisable à insaturation oléfinique ayant de 2 à 24 atomes de carbone non substitué ou substitué par C₁-C₄-alcoxy, halogène, phényle ou carboxy et w est le nombre 0 ou 1, ou Q est un polyoxyalkylène, une poly(vinylpyrrolidone), un poly(hydroxyéthylacrylate), un poly(hydroxyéthylméthacrylate), un polyacrylamide, un poly(N,N-diméthylacrylamide), un acide polyacrylique, un acide polyméthacrylique, une polyacyle alkylène imine, un télomère hydrophile ou un mélange copolymérique de deux ou plusieurs des polymères mentionnés ci-dessus qui, dans chaque cas, comprennent une ou plusieurs liaisons à insaturation éthylénique et possèdent un poids moléculaire moyen, par exemple, ≥ 100 et p1 est un nombre entier de 1 à 6 et q1 un nombre entier de 1 à 8.

14. Copolymère à blocs amphiphile selon la revendication 3 de formule (1b), dans lequel A, B, L₁, L₂ et Q sont tels que définis à la revendication 13, et p et q sont, indépendamment l'un de l'autre, un nombre entier de 2 à 15.

15. Procédé de fabrication d'un moulage comprenant la réticulation dans un moule, d'un copolymère à blocs amphiphile de formule (1) selon la revendication 1.

16. Procédé selon la revendication 15 dans lequel le moulage est un moulage ophtalmique et dans lequel le copolymère à blocs est photo-réticulé dans un moule ophtalmique à l'aide d'un rayonnement actinique.

17. Moulage obtenu à l'aide d'un procédé selon la revendication 15.

18. Moulage selon la revendication 17, qui est moulage ophtalmique, plus particulièrement une lentille de contact, une lentille intraoculaire ou une cornée artificielle.
